(19) **Europäisches Patentamt / European Patent Office / Office européen des brevets**

(11) **EP 4 672 129 A1**

(12) **EUROPEAN PATENT APPLICATION**
published in accordance with Art. 153(4) EPC

(43) Date of publication:
**31.12.2025 Bulletin 2026/01**

(21) Application number: **23924127.6**

(22) Date of filing: **06.07.2023**

(51) International Patent Classification (IPC):
**G06Q 50/10** *(2012.01)*  **G06Q 10/0635** *(2023.01)*
**G06Q 10/0833** *(2023.01)*  **G06F 21/62** *(2013.01)*
**H04L 9/40** *(2022.01)*  **G06F 16/27** *(2019.01)*
**G06F 21/74** *(2013.01)*  **G06F 21/78** *(2013.01)*

(52) Cooperative Patent Classification (CPC):
**G06F 21/6218; G06F 16/27; G06F 21/74;
G06F 21/78; G06Q 10/0635; G06Q 10/0833;
G06Q 50/10; H04L 63/10**

(86) International application number:
**PCT/JP2023/025114**

(87) International publication number:
**WO 2024/176482 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2023 JP 2023027626**

(71) Applicant: **TOYOTA JIDOSHA KABUSHIKI
KAISHA
Toyota-Shi,
Aichi-Ken 471-8571 (JP)**

(72) Inventors:
• **FUJIWARA, Teruyoshi**
  **Toyota-shi, Aichi-ken 471-8571 (JP)**
• **NITTA, Iwao**
  **Toyota-shi, Aichi-ken 471-8571 (JP)**
• **SUZUKI, Ryota**
  **Nagoya-shi, Aichi-ken 451-6015 (JP)**

(74) Representative: **Cabinet Beau de Loménie
103, rue de Grenelle / CS 90800
75340 Paris Cedex 07 (FR)**

(54) **SERVER DEVICE, INFORMATION PROCESSING METHOD, AND PROGRAM**

(57)    A server apparatus including a memory configured to store, for each of companies included in a supply chain, product information concerning products of the companies and a controller. The supply chain includes a first company and a second company and the memory stores first product information of the first company and second product information of the second company. The controller is configured to execute acquiring link information for linking first identification information included in the first product information and second identification information included in the second product information and receiving, in response to the first identification information and the second identification information being linked in the link information, setting concerning access permission for the first company to the second product information.

**(Cont. next page)**

EP 4 672 129 A1

Fig. 1

SERVER APPARATUS 1

COMPANY TERMINAL 2

COMPANY TERMINAL 2

COMPANY TERMINAL 2

COMPANY TERMINAL 2

DELIVERY

DELIVERY

DELIVERY

OEM COMPANY
(Tier0)

COMPANY A
(Tier1)

COMPANY B
(Tier2)

COMPANY C
(Tier3)

DOWNSTREAM

UPSTREAM

EP 4 672 129 A1

**Description**

[Technical Field]

The present disclosure relates to a supply chain.

[Background Art]

There has been known a system that performs information sharing in a plurality of companies constituting a supply chain. Concerning this system, for example, Patent document 1 discloses a system that visualizes a supply chain.

[Citation List]

[Patent document]

[Patent document 1] Japanese Translation of PCT International Application Publication No. 2017-500663

[Summary of the Invention]

[Problems to be solved by the invention]

An object of the present disclosure is to improve security in a system that collects information concerning a supply chain.

[Means for solving the Problems]

An aspect of an embodiment of the present disclosure is a server apparatus including: a memory configured to store, for each of companies included in a supply chain, product information concerning products of the companies; and a controller, the supply chain including a first company and a second company, the memory storing first product information of the first company and second product information of the second company, the controller being configured to execute: acquiring link information for linking first identification information included in the first product information and second identification information included in the second product information; and receiving, in response to the first identification information and the second identification information being linked in the link information, setting concerning access permission for the first company to the second product information.

An aspect of an embodiment of the present disclosure is an information processing method executed by a server apparatus including a memory configured to store, for each of companies included in a supply chain, product information concerning products of the companies, the supply chain including a first company and a second company, the memory storing first product information of the first company and second product information of the second company, the information processing method including: acquiring link information for linking first identification information included in the first product information and second identification information included in the second product information; and receiving, in response to the first identification information and the second identification information being linked in the link information, setting concerning access permission for the first company to the second product information.

An aspect of an embodiment of the present disclosure is an information processing method executed by an information processing apparatus of a target company capable of communicating with a server apparatus configured to store, for each of companies included in a supply chain, product information concerning products of the companies, the supply chain including a first company and a second company, the server apparatus storing first product information of the first company and second product information of the second company, the information processing method including: when the target company is the second company, transmitting, in response to first identification information included in the first product information and second identification information included in the second product information being linked in the server apparatus, to the server apparatus, setting concerning access permission for the first company to the second product information.

Examples of another aspect include a program for causing a computer to execute the method described above and a computer-readable storage medium non-transiently storing the program.

[Effects of the invention]

According to the present disclosure, it is possible to improve security in a system that collects information concerning a supply chain.

[Brief Description of the Drawings]

Fig. 1 is a diagram for explaining a supply chain according to a first embodiment.

Fig. 2 is a diagram for explaining a relation among products supplied by the supply chain.

Fig. 3 is a diagram illustrating an overview of processing performed between company terminals and a server apparatus.

Fig. 4 is a hardware configuration diagram of a server apparatus according to the first embodiment.

Fig. 5 is a hardware configuration diagram of a company terminal according to the first embodiment.

Fig. 6 is a software configuration diagram of the server apparatus according to the first embodiment.

Fig. 7 is a software configuration diagram of the company terminal according to the first embodiment.

Fig. 8 is an example of product information generated by a product information generation unit.

Fig. 9A is an example of a screen output by an authority setting unit.

Fig. 9B is an example of a user interface including a list of products that are candidates of a link destination.

Fig. 10 is an example of permission information generated by an authority setting unit based on input information.

Fig. 11 is a diagram illustrating a flow of processing executed by a server apparatus.

Fig. 12 is a diagram for explaining a liked plurality of pieces of product information.

Fig. 13 is a diagram for explaining a product tree and amounts of carbon dioxide emitted in processes.

Fig. 14 is an example of a screen onto which the product tree is output by an image.

Fig. 15 is an example of a product tree in the case in which products without access authority are not disclosed.

Fig. 16 is a sequence diagram for explaining processing performed by the server apparatus and the company terminal.

Fig. 17 is a sequence diagram for explaining processing performed by the server apparatus and the company terminal.

Fig. 18 is a software configuration diagram of a server apparatus according to a second embodiment.

Fig. 19 is a software configuration diagram of a company terminal according to the second embodiment.

Fig. 20 is a sequence diagram for explaining processing performed by the server apparatus and company terminals in the second embodiment.

[Mode for Carrying Out the Invention]

In recent years, there has been a request to track an amount of greenhouse effect gas discharged when products such as an automobile and a battery are manufactured, that is, track a carbon footprint.

Here, a case in which products are supplied by a supply chain including a plurality of companies is conceived. In an example, at least some of companies (intermediate suppliers) included in the supply chain can receive components from one or more upstream companies, produce an own product using the received components, and deliver the produced own product to a company in the next process (a downstream company). A most upstream company can directly produce an own product and deliver the produced own product to a company in the next process. Some of the companies of the supply chain can directly deliver a product received from another company to a different company (that is, can be involved in distribution). The plurality of companies repeat this and a final product is obtained in a final process.

In a scene in which products relating to an automobile are obtained, the supply chain may be configured from an OEM manufacturer and a plurality of suppliers. The OEM manufacturer may be a company that assembles a final product (a most downstream company) and the suppliers may be companies that supply components, materials, assemblies, and the like for producing the product. Companies included in the supply chain can be determined according to a product.

Note that, in the following description, a component or the like produced by each of the plurality of suppliers is referred to as "product" and a final product is referred to as "final product". In an example, the final product can be supplied to consumers. The suppliers and the OEM manufacturer included in the supply chain are simply referred to as "company". Each of a plurality of Tiers included in the supply chain is referred to as "Tier".

In such a system, in order to perform an arithmetic operation concerning traceability (for example, calculate a total amount of greenhouse effect gas discharged according to manufacturing of the final product), it is requested to clarify a supply relation of products among a plurality of companies. This is because, unless a relation among a plurality of products constituting the final product is clear, it is difficult to correctly calculate a total amount of greenhouse effect gas discharged in a plurality of processes. In order to solve this problem, for example, processing for generating a tree indicating the supply relation among the plurality of products constituting the final product (hereinafter, product tree) is requested. The server apparatus according to the present disclosure is an apparatus that generates such a product tree.

On the other hand, the product tree and a result of the arithmetic operation concerning the traceability can include a transaction relation among the companies and detailed information concerning the products produced by the companies. Therefore, it is not preferable to disclose these pieces of information to all the companies.

In order to cope with this problem, a method in which the companies constituting the supply chain designate information concerning own product permitted to be disclosed to the other companies and sets only the information concerning the permitted product as a target of the disclosure is conceivable.

However, if the companies are caused to perform permission setting for information disclosure, unintended disclosure of information is likely to occur because of an operation mistake or the like.

The server apparatus according to the present disclosure solves such a problem.

A server apparatus according to an aspect of the present disclosure is a server apparatus including a memory configured to store, for each of companies included in a supply chain, product information concerning products of the companies and a controller.

Specifically, the supply chain includes a first company and a second company, the memory stores first product information of the first company and second product information of the second company, and the controller is configured to execute acquiring link information for linking first identification information included in the first product information and second identification information included in the second product information and receiving, in response to the first identification information and the second identification information being linked in the link information, setting concerning access permission for the first company to the second product information.

In a supply chain, a company located on an upstream side delivers a product to a company located on a downstream side. In an example, a most downstream company is a company (an OEM manufacturer) that assembles a final product. Here, any companies included in the supply chain are represented as a first company and a second company. The first company and the second company may be or may not be companies having a transaction relation. That is, the first company and the second company may not always be companies arranged in Tiers adjacent to each other and having an upstream and downstream relation.

The server apparatus according to the present disclosure acquires information (link information) for linking pieces of product information. The link information is information indicating link relation between products. Linking indicates correlating a supply relation between the products. For example, when a new product B is produced using a certain product A as a material, it can be said that there is a link relation between the product A and the product B. By repeating processing for linking a plurality of products, the server apparatus can construct a product tree corresponding to a final product.

The first product information is product information corresponding to a first product and the second product information is product information corresponding to a second product.

The linking of the first product information and the second product information can be executed by using, as keys, the first identification information included in the first product information and the second identification information included in the second product information. The first identification information and the second identification information can be ones of a plurality of items included in the first product information and the second product information. The first identification information and the second identification information are preferably information having low confidentiality like identifiers of products.

Further, the server apparatus receives, in response to the first product information and the second product information being linked, setting concerning access permission for the first company to the second product information. The setting concerning access permission for the first company to the second product information can be received from an account of the second company.

The setting for permitting the first company to access the second product information is received on condition that the first product information and the second product information are linked beforehand. The first product information and the second product information being linked means that there is a supply relation between the products. In other words, access permission to product information cannot be issued to a company not having a supply relation between products. With such a configuration, it is possible to prevent an error of permitting an unrelated company to access product information of an own company.

Note that, when the first product information and the second product information are not linked beforehand, the second company cannot perform setting of access permission for the first company. Thus, the server apparatus may receive, from an account of the first company, a permission demand for demanding permission for the second company to access to the second product information and may perform, based on the permission demand, linking of the pieces of product information and setting of access permission.

The permission demand is a request for demanding the own company to permit access to the second product information managed by the second company. The permission demand may include first identification information of the first product information linked with the second product information. The first identification information can be, for example, an identifier (a product number or the like) of a product indicated by the first product information.

The server apparatus that has received the permission demand specifies the second product information linked with the first product information and performs linking of both of the pieces of product information and then receives, from the account of the second company, setting concerning permission of access to the second product information.

When receiving the permission demand, the server apparatus receives, from the account of the second company, an answer to the permission demand. Since the information for identifying the first product information is included in the permission demand, the second company that has checked the information responds with information (the second identification information) for identifying the second product information linked with the first product information. The second identification information can be, for example, an identifier (a product number or the like) of a product indicated by the second product information. The server apparatus can link the first product information and the second product information using the first identification information and the second identification information.

Subsequently, subsequent to having acquired the link information, the server apparatus receives setting concerning access permission to the second product information.

As described above, the server apparatus may execute, by being triggered by the permission demand transmitted from the first company, both of processing for linking the pieces of product information and processing for receiving the setting concerning the access permission from the second company.

Note that the receiving the setting concerning the access permission to the second product information may include receiving, from the account of the second company, permission information designating information for permitting access for the first company among pieces of information included in the second product information.

When the second product information includes a plurality of items, information for permitting access for the first company can also be individually designated.

Specific embodiments of the present disclosure are described below based on the drawings. Hardware configurations, module configurations, function configurations, and the like described in the embodiments are not meant to limit the technical scope of the disclosure only thereto unless particularly described otherwise.

(First Embodiment)

An information processing system according to the present embodiment is a system that provides information concerning products supplied by a supply chain including a plurality of companies. The information concerning the products is typically information concerning traceability. Companies belonging to the supply chain may be determined as appropriate according to attributes of the products and the like.

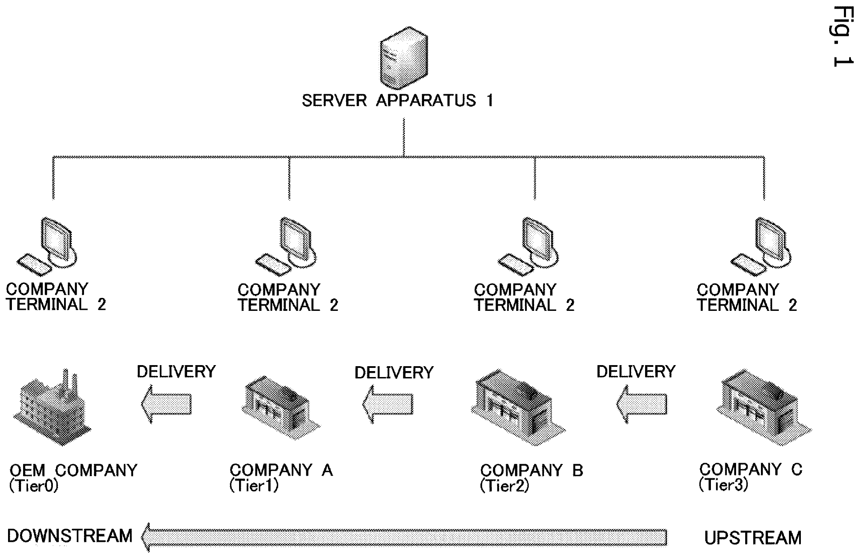

First, the structure of the supply chain is described. Fig. 1 is a diagram for explaining an example of a supply chain according to the present embodiment. The supply chain illustrated in Fig. 1 is configured by an OEM company and a plurality of companies that are suppliers. In the example illustrated in Fig. 1, for example, a supply chain that manufactures an automobile itself and products relating to the automobile such as a battery is assumed. The OEM company assembles a final product. The plurality of companies (companies A to C), which are the suppliers, supply components, materials, assemblies, and the like for manufacturing the final product. Each of the plurality of companies, which are the suppliers, produce one or more products and deliver the products to a company located in an immediately lower Tier. The plurality of companies repeats this and a final product is obtained in a final process (that is, the OEM company).

In the present embodiment, in Tiers of the supply chain, a side of delivering a product is referred to as upstream side and a side of purchasing the product and producing a new product is referred to as downstream side. In the present specification, a company located on the upstream side is referred to as upstream company and a company located on the downstream side is referred to as downstream company. A product produced by the upstream company is referred to as upstream product and a product produced by the downstream company is referred to as downstream product. The upstream product is included in the downstream product. In the present embodiment, a class included in a supply chain is referred to as Tier. A Tier 0 is a lowermost class that assembles a final product (corresponding to the OEM company). Tiers 1, 2, and 3 transition to the upstream side. Depending on a class of attention, a downstream company changes to an upstream company. For example, a company B located in the Tier 2 is a downstream company in a relation with the Tier 3 but is an upstream company in a relation with the Tier 1. In this way, the definitions of the upstream company and the downstream company can change for each of classes.

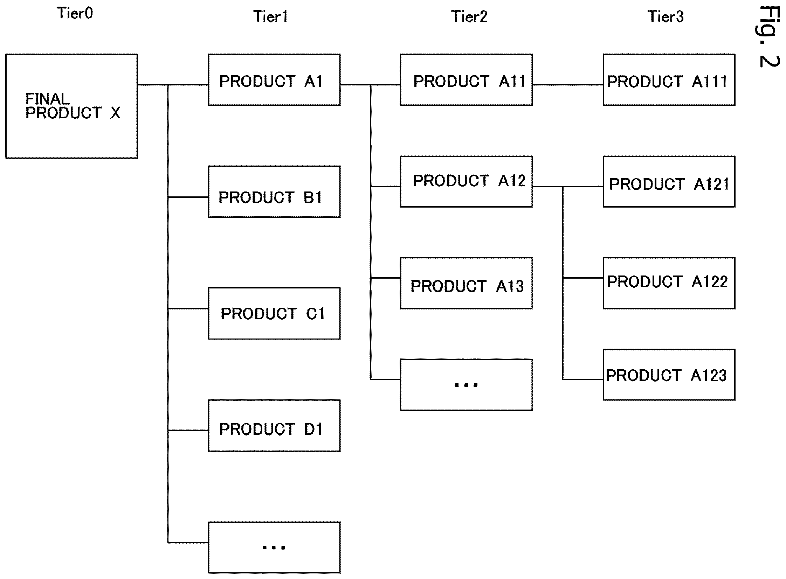

Fig. 2 is a diagram for explaining a relation among products supplied by the supply chain. Here, a supply relation among a plurality of products constituting a final product X is represented by a tree diagram. In the present example, the final product X is produced by assembling products A1, B1, C1, D1, and the like. The product A1 is produced by assembling products A11, A12, A13, and the like. In this way, a relation among a plurality of products constituting a final product can be represented by a tree diagram in which the individual products are nodes.

A tree diagram concerning a specific final product is referred to as product tree below.

A server apparatus 1 according to the present embodiment collects, from terminals corresponding to companies (company terminals 2), information concerning products produced by the companies (hereinafter, product information) and information for linking the kinds of product information and generates such a product tree based on these kinds of information. The product information includes information concerning traceability (for example, information concerning emission of greenhouse effect gas. Hereinafter, traceability-related information). Tracking of a carbon footprint or the like can be performed by tracing the product tree.

As illustrated in Fig. 1, the information processing system according to the present embodiment includes a server apparatus 1 and a plurality of company terminals 2.

The company terminal 2 is a terminal corresponding to each of the plurality of companies constituting the supply chain. The number of terminals corresponding to the companies may be optional. A terminal corresponding to a target company may include a terminal of a company (for example, an agency company) that performs operation concerning the target company.

The server apparatus 1 collects information for generating a product tree from each of the plurality of company terminals 2 and generates the product tree based on the collected information. Further, the server apparatus 1 can execute, based on the generated product tree, processing concerning traceability (typically, for example, processing for calculating emission of carbon dioxide). The server apparatus 1 can transmit an execution result of the processing to the company terminals 2.

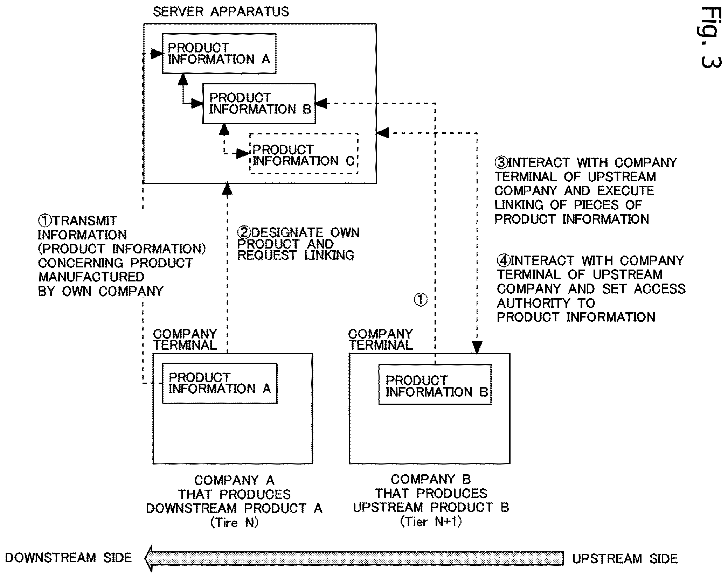

Subsequently, an overview of processing for the server apparatus 1 generating a product tree is described with reference to Fig. 3. Fig. 3 is a diagram illustrating an overview of processing performed between the company terminal 2 and the server apparatus 1. In an example illustrated in Fig. 3, it is assumed that, in any class, a company A, which is a downstream company, and a company B, which is an upstream company, are present. The company B produces a product B and delivers the product B to the company A and the company A produces a product A using the product B. That is, in the example illustrated in Fig. 3, the product B is a child node of the product A on the product tree.

In order to generate a product tree, the company terminals 2 corresponding to the companies transmit information concerning products produced by the own companies to the server apparatus 1. In the present example, the company terminal 2 corresponding to the company A transmits product information concerning the product A (referred to as product information A) to the server apparatus 1. Similarly, the company terminal 2 corresponding to the company B transmits product information concerning the product B (referred to as product information B) to the server apparatus 1. The product information of the companies is stored in the server apparatus 1.

In order to generate a product tree and perform processing concerning traceability (for example, processing for calculating $CO_2$ emission) based on the generated product tree, the server apparatus 1 needs to execute phases of two types described below.

A first phase is a phase for linking pieces of product information stored in the server apparatus 1. The linking indicates correlating a supply relation between products.

In the illustrated example, the product A is produced using the product B. That is, since a supply relation is present between the product A and the product B, the product information A and the product information B are targets of linking.

By repeating this processing for all the companies, the server apparatus 1 can generate a product tree. In addition, the server apparatus 1 can perform, for example, arithmetic processing concerning traceability.

However, if all of a product tree generated based on a result of the linking and traceability-related information (for example, $CO_2$ emission in production processes of the companies) calculated based on the product tree are disclosed, confidentiality of information concerning the companies constituting the supply chain and information concerning products produced by the companies is damaged.

Thus, the server apparatus 1 according to the present embodiment imparts, based on designation from an upstream company, access authority to product information of an upstream product to a downstream company. This is referred to as second phase. Then, the server apparatus 1 permits reference to information from the downstream company within a range of the imparted authority.

In the example illustrated in Fig. 3, for example, the company terminal 2 corresponding to the company B, which is an upstream company, transmits information for instructing to "impart access authority to the product information B to the company A" to the server apparatus 1. The server apparatus 1 imparts, based on the received information, access authority to the product information B from the company A.

When a reference demand to a product tree is received from the company terminal 2 corresponding to the company A, the server apparatus 1 provides, to the company terminal 2, a product tree in which information other than information for which access authority is imparted to the company A is concealed. Accordingly, it is possible to conceal information concerning unrelated companies and products.

The first and second phases are executed by being triggered by a request transmitted from the company terminal 2 of the downstream company.

It can also be said that the request is a request for causing the server apparatus 1 to execute the first phase, that is, causing the server apparatus 1 to link the product A and the product B, which is the upstream product. It can also be said that the request is a request for causing the server apparatus 1 to execute the second phase, that is, demanding permission of access to product information of the product B, which is the upstream product.

The request includes an identifier of the downstream product, which is a target of linking. In the example illustrated in Fig. 3, the company terminal 2 of the company A transmits a request including an identifier of the product A to the server apparatus 1.

The request is referred to as link request below. The link request is an example of a "permission demand" in the present disclosure.

When the link request is transmitted from the company terminal 2 of the downstream company, the server apparatus 1 transmits a request to the upstream company and causes the upstream company to respond with a product linked with the product relating to the link request. In the case of the example illustrated in Fig. 3, the upstream company (the company B) responds to the server apparatus 1 with an identifier of the own product (the company B) linked with the product (the product A) relating to the link request. A combination of the identifier of the product A and the identifier of the product B is an example of "link information" in the present disclosure.

The server apparatus 1 links the pieces of product information (that is, the product information A and the product information B) based on these pieces of information. That is, the server apparatus 1 executes the first phase.

Subsequent to the first phase, the server apparatus 1 transmits a request to the upstream company and causes the upstream company to set access authority to a product linked with the product relating to the link request. In the case of the example illustrated in Fig. 3, the upstream company (the company B) responds to the server apparatus 1 whether to permit access to product information of the own product (the product B) linked with the product (the product A) relating to the link request. Note that the access permission may be issued for all pieces of target product information or may be issued for only some items included in the target product information.

The server apparatus 1 sets, based on these pieces of information, access authority from the downstream company (the company A) to the product information (the product information B) of the upstream product. That is, the server apparatus 1 executes the second phase.

[Hardware configuration]

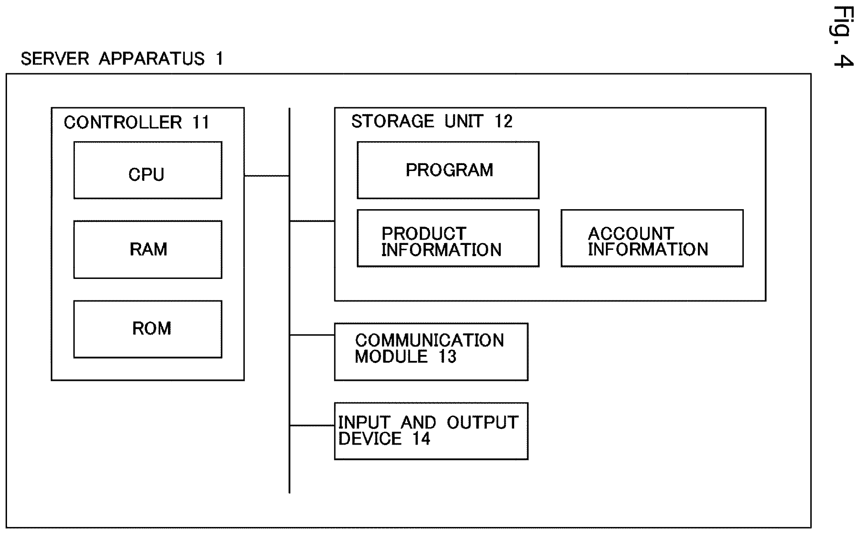

Subsequently, hardware configurations of the apparatuses constituting the system are described. Fig. 4 is a diagram schematically illustrating an example of a hardware configuration of the server apparatus 1 according to the present embodiment. The server apparatus 1 is configured as a computer including a controller 11, a storage unit 12, a communication module 13, and an input and output device 14.

The server apparatus 1 can be configured as a computer including a processor (a CPU, a GPU, or the like), a main memory (a RAM, a ROM, or the like), and an auxiliary storage device (an EPROM, a hard disk drive, a removable medium, or the like). In the auxiliary storage device, an operating system (OS), various programs, various tables, and the like are stored. Functions (software modules) matching predetermined purposes described below can be implemented by executing the programs stored in the auxiliary storage device. However, some or all of the functions may be implemented as hardware modules by a hardware circuit such as an ASIC or an FPGA.

The controller 11 is an arithmetic unit that implement various functions of the server apparatus 1 by executing predetermined programs. The controller 11 can be implemented by a hardware processor such as a CPU. The controller 11 may be configured to include a RAM, a ROM (Read Only Memory), and a cache memory.

The storage unit 12 is means for storing information and is configured by a storage medium such as a RAM, a magnetic disk, or a flash memory. In the storage unit 12, a program to be executed by the controller 11, data used by the program, and the like are stored.

A database is constructed in the storage unit 12. Product information collected from the plurality of company terminals 2 and account information concerning companies are stored in the database. Details are described below.

The communication module 13 is a communication interface for connecting the server apparatus 1 to a network. The communication module 13 may be configured to include, for example, a network interface board and a wireless communication interface for wireless communication. The server apparatus 1 can perform data communication with other computers (for example, the company terminals 2) via the communication module 13.

The input and output device 14 is means for receiving input operation performed by an operator and presenting information to the operator. Specifically, the input and output device 14 includes devices for performing input such as a mouse and a keyboard and devices for performing output such as a display and a speaker. The input and output device may be integrally configured by, for example, a touch panel display.

Note that, in a specific hardware configuration of the server apparatus 1, omission, substitution, and addition of components are possible as appropriate according to an embodiment. For example, the controller 11 may include a plurality of hardware processors. The hardware processors may be configured by a microprocessor, an FPGA, a GPU, and the like. The input and output device 14 may be omitted or an input and output device (for example, an optical drive) other than the exemplified one may be added. The server apparatus 1 may be configured by a plurality of computers. In this case, hardware configurations of the computers may coincide or may not coincide.

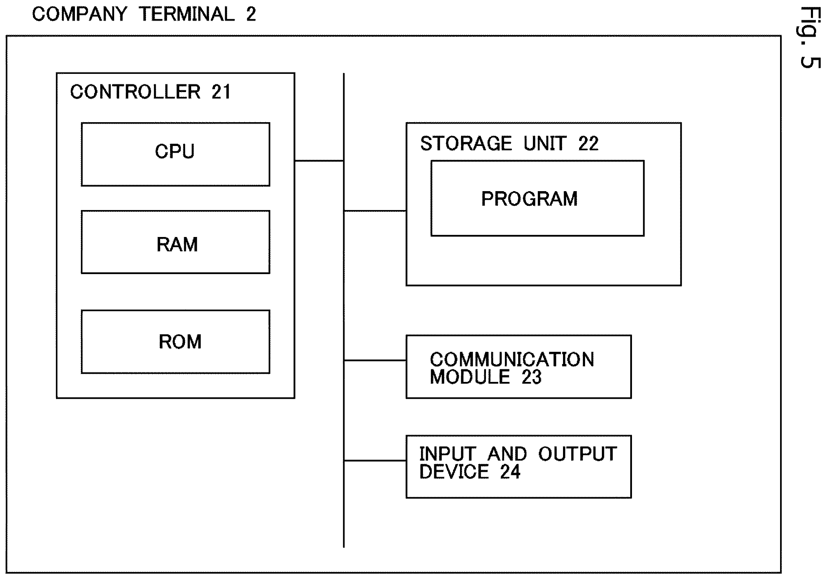

Fig. 5 is a diagram schematically illustrating an example of a hardware configuration of the company terminal 2 according to the present embodiment. The company terminal 2 is configured as a computer including a controller 21, a storage unit 22, a communication module 23, and an input and output device 24.

Like the server apparatus 1, the company terminal 2 can be configured as a computer including a processor (a CPU, a GPU, or the like), a main memory (a RAM, a ROM, or the like), and an auxiliary storage device (an EPROM, a hard disk drive, a removable medium, or the like). However, some or all of functions (software modules) may be implemented as hardware modules by a hardware circuit such as an ASIC or an FPGA.

The controller 21 is an arithmetic unit that implements various functions of the company terminal 2 by executing predetermined programs. The controller 11 can be implemented by a hardware processor such as a CPU. The controller 21 may be configured to include a RAM, a ROM (Read Only Memory), and a cache memory.

The storage unit 22 is means for storing information and is configured by a storage medium such as a RAM, a magnetic disk, or a flash memory. In the storage unit 22, a program to be executed by the controller 21, data used by the program, and the like are stored.

The communication module 23 is a communication interface for connecting the company terminal 2 to a network. The communication module 23 may be configured to include, for example, a network interface board and a wireless communication interface for wireless communication. The company terminal 2 can perform data communication with other computers (for example, the server apparatus 1) via the communication module 23.

The input and output device 24 is means for receiving input operation performed by an operator and presenting information to the operator. Specifically, the input and output device 24 includes devices for performing input such as a mouse and a keyboard and devices for performing output such as a display and a speaker. The input and output device may be integrally configured by, for example, a touch panel display.

Note that, in a specific hardware configuration of the company terminal 2, as in the server apparatus 1, omission, substitution, and addition of components are possible as appropriate according to an embodiment.

[Software configuration]

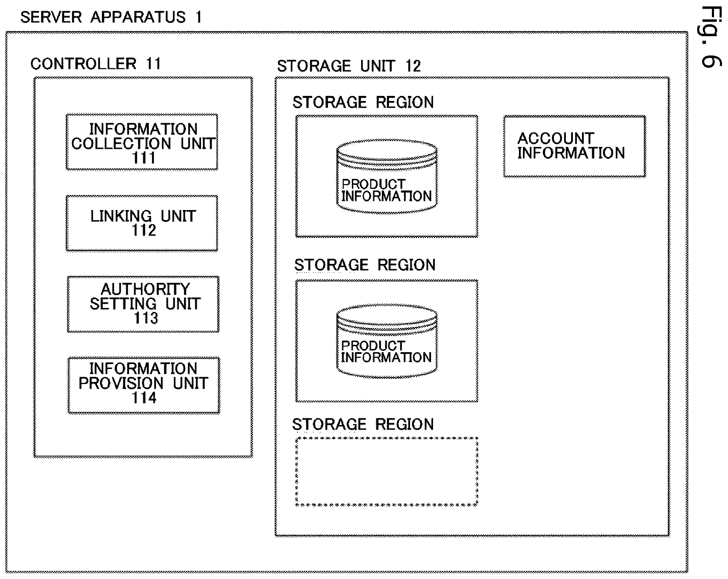

Subsequently, software configurations of the apparatuses constituting the system are described. Fig. 6 is a diagram schematically illustrating a software configuration of the server apparatus 1 according to the present embodiment. In the present embodiment, the controller 11 is configured to include four software modules of an information collection unit 111, a linking unit 112, an authority setting unit 113, and an information provision unit 114. The software modules may be implemented by programs stored in the storage unit 12 being executed by the controller 11 (a CPU). Note that information processing executed by the information collection unit 111, the linking unit 112, the authority setting unit 113, and the information provision unit 114 described below is synonymous with the information processing executed by the controller 11.

The information collection unit 111 is configured to execute processing for receiving product information transmitted from the company terminal 2 and storing the product information in the storage unit 12.

The linking unit 112 is configured to perform interaction with the company terminal 2 to acquire, from the company terminal 2, information (link information) for linking pieces of product information. Further, the linking unit 112 is configured to execute, based on the acquired information, for the product information stored in the storage unit 12, processing for writing information representing a link relation. The first phase described above is executed by the linking unit 112.

The authority setting unit 113 is configured to receive, from the company terminal 2, information for setting access authority to product information (hereinafter, permission information). Further, the authority setting unit 113 is configured to execute, based on the received information, processing for setting the access authority to the product information stored in the storage unit 12.

The second phase described above is executed by the authority setting unit 113.

The information provision unit 114 is configured to execute information processing relating to a product tree and output a result of executing the information processing. The information processing relating to the product tree may include processing for performing an arithmetic operation concerning traceability for the product tree. The outputting the result of executing the information processing may include processing for providing information concerning the generated product tree to the company terminal 2. In an example, the information provision unit 114 is configured to generate information concerning a product tree and output the generated information concerning the product tree.

In the present embodiment, the storage unit 12 is configured to include a plurality of logical storage regions. In each of the plurality of storage regions, different kinds of access authority can be set as in, for example, a region where access authority is imparted to the company A, a region where access authority is imparted to the company B, and a region where access authority is imparted to both the companies A and B. The authority setting unit 113 performs setting of access authority by storing product information received from the company terminal 2 in an appropriate storage region. A specific processing method is described below.

Account information is stored in the storage unit 12. In the present embodiment, when operators of companies log in to the server apparatus 1 using corresponding accounts of the companies via the company terminals 2, interaction between the server apparatus 1 and the company terminals 2 is performed. The account information is information concerning accounts corresponding to the companies constituting a supply chain. Note that the logging in using the account is an example of accessing the server apparatus 1 as a company corresponding to the account. However, an access method to the server apparatus 1 may not be limited to such an example and may be selected as appropriate according to an embodiment.

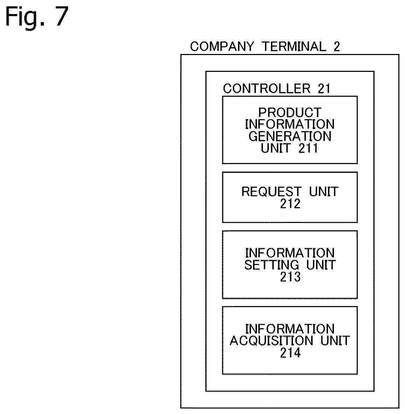

Fig. 7 is a diagram schematically illustrating a software configuration of the company terminal 2 according to the present embodiment. In the present embodiment, the controller 21 is configured to include four software modules of a product information generation unit 211, a request unit 212, an information setting unit 213, and an information acquisition unit 214. The software modules may be implemented by executing, with the controller 21 (the CPU), the programs stored in the storage unit 22. Note that information processing executed by the product information generation unit 211, the request unit 212, the information setting unit 213, and the information acquisition unit 214 described below is synonymous with the information processing executed by the controller 21.

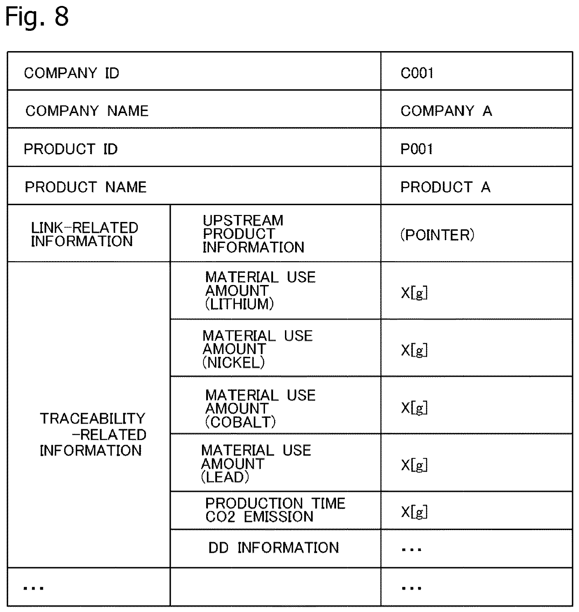

The product information generation unit 211 is configured to generate information concerning a product of a company corresponding to the company terminal 2 (product information). Fig. 8 is an example of the product information generated by the product information generation unit 211. The product information may be input via an operator of the apparatus. In the present embodiment, the product information is configured to include fields of a company ID, a company name, a product ID, and a product name. The company ID and the company name are an identifier and a name of a company that produces a target product (that is, a company that uses the company terminal 2). The product ID and the product name are an identifier and a name of the target product.

Further, the product information is configured to include link-related information. The link-related information is information for identifying an upstream product linked with a target product. In the present embodiment, the link-related information includes an "upstream product information" field.

The upstream product information field is configured to store information for identifying product information corresponding to the upstream product linked with the target product (that is, a product necessary for producing the target product and included in the target product). The upstream product information field is used when the server apparatus 1 performs linking of products. Basically, the target product is not linked with the upstream product at a stage when the product information is generated. Therefore, a value indicating the upstream product may not be stored in the upstream product information field.

Further, the product information is configured to include traceability-related information. In an example, the traceability-related information may include a use amount of a material (for example, an upstream product) per production amount of a product, information concerning a recycling rate of a predetermined material, emission of greenhouse effect gas emitted when the product is produced, due diligence-related information, or a combination of the foregoing. The predetermined material may be, for example, lithium, nickel, cobalt, lead, or graphite. The recycling rate may be directly expressed or may be indirectly expressed like a combination of a total use amount and a use amount of a recycle material. These values are values corresponding to a process of producing the target product. For example, in the case of an example illustrated in Fig. 3, for example, an amount of greenhouse effect gas emitted in a production activity for the product A is stored in the traceability-related information included in the product information A. Information concerning a process until the upstream product is produced (for example, an amount of greenhouse effect gas emitted until the upstream product B is produced) is not included in the traceability-related information included in the product information A.

Note that the traceability-related information may be selected as appropriate according to an embodiment. In an example, emission of greenhouse effect gas (carbon footprint) may include emissions of a scope 1, a scope 2, and a scope 3. The scope 1 may be direct emission of greenhouse effect gas by a company itself. The scope 2 may be indirect emission involved in use of electricity, heat, and steam supplied from other companies. The scope 3 may be indirect emission other than the scope 1 and the scope 3. In an example, the due diligence-related information may be a technical document indicating that, concerning a product in which a target material (for example, cobalt, natural graphite, lithium, or nickel) is included, duties of an amount of a material contained in the product and responsible mineral procurement of a refinery or the like are fulfilled. In another example, the due diligence-related information may include a score indicating a degree of the fulfillment of the duties.

The product information generation unit 211 is configured to acquire such information via an operator of the company terminal 2 and transmit the information to the server apparatus 1 at any timing.

The request unit 212 is configured to transmit a link request for requesting the server apparatus 1 to link the product information of the own company transmitted to the server apparatus 1 with the upstream product.

As described with reference to Fig. 3, the server apparatus 1 executes the phase (the first phase) for linking pieces of product information and the phase (the second phase) for imparting access authority to the product information to another company. The two phases are started based on a link request transmitted from the downstream company. The request unit 212 generates the link request and transmits the link request to the server apparatus 1. That is, the request unit 212 operates when a company that uses the company terminal 2 is the downstream company.

The request unit 212 transmits a link request including a company ID of the own company and a product ID to the server apparatus 1. The product ID is an identifier of an own product that is a target of linking. In the example illustrated in Fig. 3, the company terminal 2 of the company A transmits a link request including an identifier of the product A to the server apparatus 1. It can also be said that the link request is a request for causing the server apparatus 1 to link the product A, which is the own product, and the upstream product (in this example, the product B) corresponding to the product A.

The server apparatus 1 that has received the link request performs interaction with the company terminal 2 of the upstream company and executes liking of the pieces of product information (the first phase) and imparting of access authority (the second phase).

The information setting unit 213 performs interaction with the server apparatus 1 based on a request from the server apparatus 1 that has received the link request and provides, to the server apparatus 1, information for causing the server apparatus 1 to execute the first phase and the second phase described above.

The information setting unit 213 operates when the company that uses the company terminal 2 is the upstream company.

First, the information setting unit 213 responds with, based on a request from the server apparatus 1 that has received the link request, an own product having a supply relation with a designated product (a product designated by the downstream company and relating to the link request). Accordingly, the server apparatus 1 can specify a downstream product and an upstream product liked with each other.

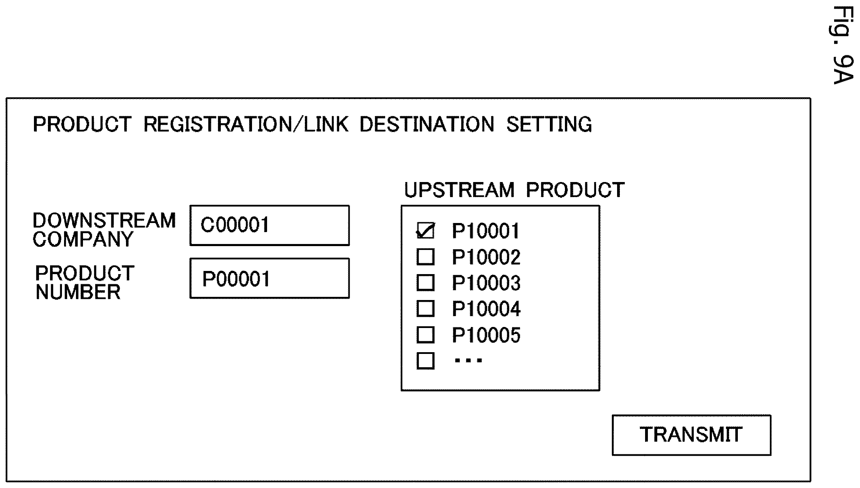

Fig. 9A is an example of a user interface for responding with the own product having the supply relation with the product relating to the link request.

Note that a list of products presented in Fig. 9A can be a list of products, transaction of which was performed with the own company in the past. The server apparatus 1 may generate the list further based on stored transaction data.

The information setting unit 213 is configured to subsequently cause the operator to select, out of the list, an upstream product to be linked. Further, the information setting unit 213 is configured to transmit, to the server apparatus 1, as link information, in a pair, an identifier of a product that is a link source (a downstream product) and an identifier of an upstream product that is a link destination. The server apparatus 1 can perform linking of the pieces of product information according to the link information.

As described above, the information setting unit 213 provides, based on the request from the server apparatus 1 that has received the link request, to the server apparatus 1, data for linking a designated downstream product and a designated upstream product and causes the server apparatus 1 to perform linking of pieces of product information. Accordingly, the server apparatus 1 can decide a state of the product tree.

Further, the information setting unit 213 is configured to, secondly, set, for the product information of the upstream product that is the link target, access permission for the downstream company.

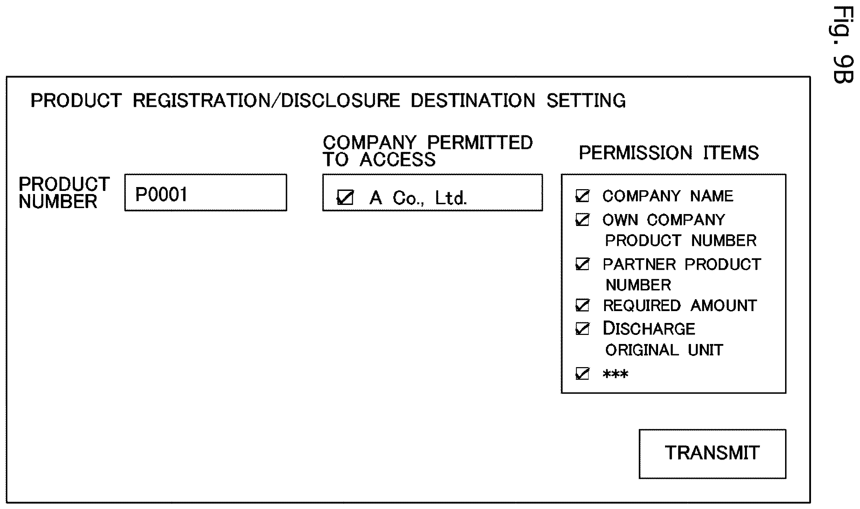

Fig. 9B is an example of a screen output by the information setting unit 213. As illustrated, the information setting unit 213 is configured to receive, for a predetermined own product, setting about whether to permit access from the downstream company. An operator of the upstream company sets, via the screen, a company for which access is permitted, a target product, and an item. In the illustrated example, only a product relating to the link request and an own product linked in the server apparatus 1 are presented as selections.

Note that an access authority may be set in units of products or may be set in units of items included in product information ("permission item" in the figure). Accordingly, for example, it is also possible to take measures for partial disclosure for, for example, disclosing presence of a product but not disclosing specific information concerning materials in use and amounts of use.

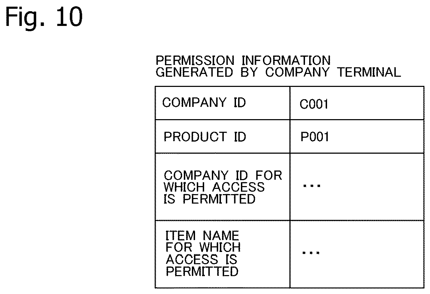

The information setting unit 213 generates permission information including input content and transmits the permission information to the server apparatus 1. Fig. 10 is an example of the permission information. The information setting unit 213 is configured to transmit the permission information to the server apparatus 1 at any timing.

Note that, in a screen illustrated in Fig. 10, access permission may be able to be set for a company other than the company that has transmitted the link request.

In the example illustrated in Fig. 3, the company B sets the access permission for the company A belonging to the adjacent Tier. However, a company to which access permission is given may not always belong to the adjacent Tier. For example, in the example illustrated in Fig. 2, a company belonging to a Tier 3 (that produces a product A111) may permit a company belonging to a Tier 1 (which produces a product A1) to access an own product. The product A1 and the product A111 are not directly linked (do not have a direct supply relation) but are indirectly linked (have an indirect supply relation) via a product A11. The company to which the access permission is given may be a company having an indirect link relation.

The information acquisition unit 214 is configured to demand the server apparatus 1 to provide a product tree (and incidental information) and output information transmitted from the server apparatus 1.

[Details of processing]

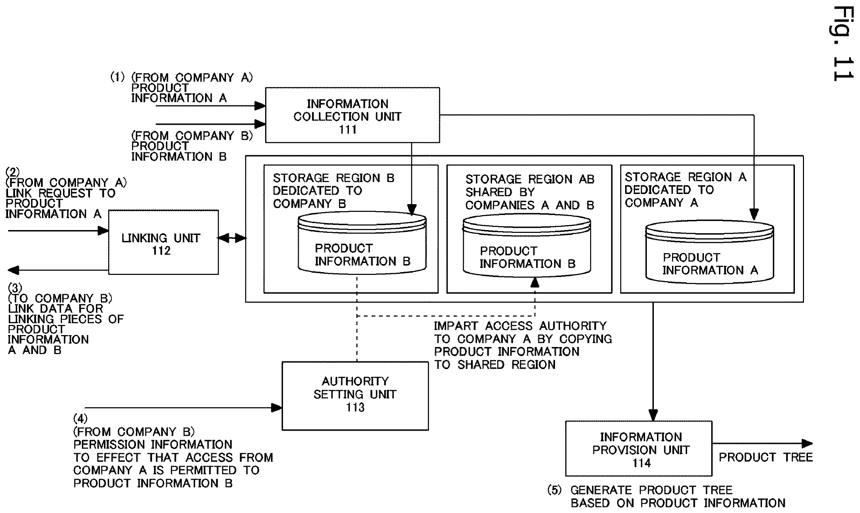

Subsequently, specific content of processing performed by the server apparatus 1 and the company terminal 2 is described. Fig. 11 is a diagram illustrating an example of a flow of processing executed by the server apparatus 1 based on a request from the company terminal 2.

The processing performed by the server apparatus 1 can be roughly divided into the following five types.

    (1) Processing for receiving product information transmitted from the company terminals 2 of the plurality of companies included in the supply chain and storing the received product information.

(2) Processing for receiving a link request transmitted from the company terminal 2 of the downstream company

(3) Processing for, in response to the link request, performing interaction with the company terminal 2 of the upstream company and linking pieces of product information based on a result of the interaction

(4) Processing for, in response to the link request, performing interaction with the company terminal 2 of the upstream company and setting access authority to the product information based on a result of the interaction

(5) Processing for, as a result of the linking and the access authority, providing information concerning a product tree

In the example illustrated in Fig. 11, the company A is a downstream company and the company B is an upstream company. A product produced by the company A is the product A and a product produced by the company B is the product B. Product information corresponding to the product A is the product information A and product information corresponding to the product B is the product information B.

First, the information collection unit 111 of the server apparatus 1 acquires product information from the product information generation unit 211 of the company terminal 2 ((1) described above). In the example illustrated in Fig. 11, the server apparatus 1 acquires the product information A from the company terminal 2 corresponding to the company A and acquires the product information B from the company terminal 2 corresponding to the company B. At this time, the information collection unit 111 stores the product information A in a storage region where access authority is imparted to only the company A (hereinafter, storage region A). The information collection unit 111 stores the product information B in a storage region where access authority is imparted to only the company B (hereinafter, storage region B). In this way, the information collection unit 111 stores product information transmitted from any company in a dedicated storage region where access authority is imparted to only the company.

Subsequently, the linking unit 112 of the server apparatus 1 receives a link request from the company terminal 2 ((2) described above). The link request is transmitted from the company terminal 2 of the downstream company. In the example illustrated in Fig. 11, it is assumed that the company terminal 2 of the company A has transmitted the link request. The link request includes a company ID and a product ID of a target product.

Subsequently, the linking unit 112 of the server apparatus 1 performs linking of the pieces of product information based on the received link request ((3) described above).

The linking unit 112 transmits the product ID of the target product included in the link request to the company terminal 2 of the upstream company and causes the upstream company to respond with an upstream product having a supply relation with the product.

Note that the upstream company that the linking unit 112 causes to respond may be specified by the server apparatus 1 or may be designated on the downstream company side. For example, the downstream company side may acquire information for identifying an upstream company having a transaction relation and transmit the link request including the information (for example, an identifier of the upstream company). For example, the server apparatus 1 that has received the link request may specify, based on transaction data in the past, a company ledger, or the like, an upstream company having a transaction relation with the downstream company that has transmitted the link request.

The company terminal 2 (the information setting unit 213) of the upstream company causes the operator to select a product to be linked. In the case of this example, the product A and the product B are targets of linking each other. For example, for the product A, the operator inputs, via the input and output device 24, information indicating that the upstream product is the product B.

The information setting unit 213 transmits data (link data) for correlating the upstream product (the product B) and the downstream product (the product A) with each other to the linking unit 112.

As described with reference to Fig. 8, the field (the link-related information) concerning the product to be the link destination is provided in the product information. The linking unit 112 stores information corresponding to the product information B (that is, the upstream product) in the link-related information included in the product information A. For example, an identifier of the upstream product, an identifier of a company that produces the upstream product, and the like are stored in the link-related information.

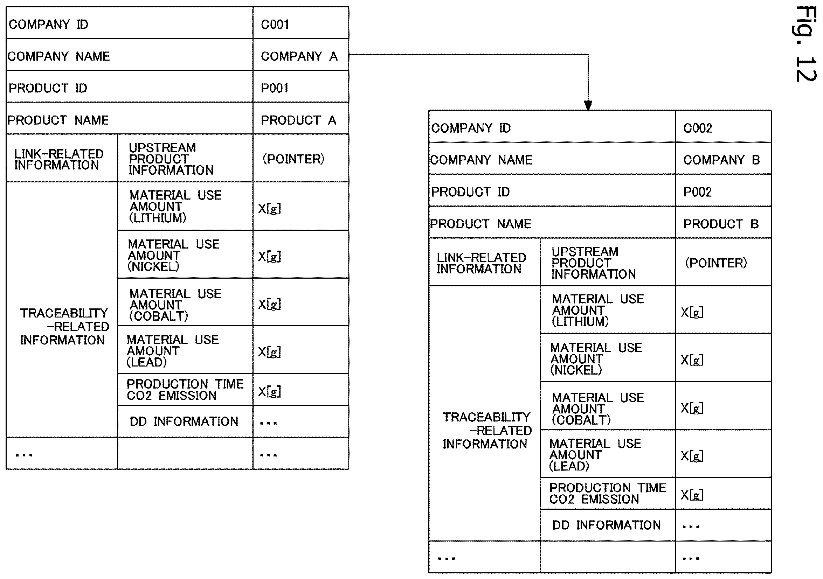

Note that a pointer or the like to the product information to be the link destination may be stored in the link-related information. Fig. 12 is a diagram for explaining an example of a case in which a plurality of pieces of product information are linked by a pointer. An arrow mark in the figure indicates the pointer. The pointer points at an address and the like of the product information corresponding to the upstream product. According to the processing described above, a part of a tree structure in which the product information of the downstream product is a parent node and the product information of the upstream product is a child node is formed.

Subsequently, the authority setting unit 113 of the server apparatus 1 receives, from the company terminal 2, information (permission information) for setting access authority for the product information and sets, based on the permission information, access authority for the product information stored in the storage unit 12 ((4) described above).

Here, the authority setting unit 113 of the server apparatus 1 receives the permission information from the information setting unit 213 of the company terminal 2 and sets access authority to the product information according to the received permission information. The permission information is information in which a product and a company that permits access to product information of the product are correlated as illustrated in Fig. 10.

In the example illustrated in Fig. 11, it is assumed that the authority setting unit 113 receives permission information to the effect that access to the product information B of the upstream company from the company A, which is the downstream company, is permitted. In this case, the authority setting unit 113 copies the product information B stored in the storage region B to a storage region where access authority is imparted to both the companies A and B (hereinafter, storage region AB). Accordingly, the product information B is in a state of accessible from both of the company A and the company B. Note that, when access authority is not set for a specific item included in the product information, the item is excluded from a copy target to the storage region AB.

In the following description, a storage region where access authority is imparted to only a specific company is referred to as "dedicated storage region" and a storage region where access authority is imparted to a plurality of companies is referred to as "shared storage region".

In this way, the copy of the product information is executed by the server apparatus 1 in response to permission information being received from the company terminal 2. That is, it can be said that the company terminal 2 transmits permission information to the server apparatus 1 to perform an operation for causing the server apparatus 1 to copy product information identified by the permission information from a dedicated storage region of the target company to a shared storage region accessible from the downstream company.

Subsequently, the information provision unit 114 of the server apparatus 1 generates information concerning a product tree based on the stored product information and outputs the information concerning the product tree ((5) described above). The generating information concerning a product tree indicates processing for, after a link among nodes is formed by linking of pieces of product information, generating various kinds of information concerning products (for example, information concerning traceability and an image representing, with a tree diagram, a link relation among products). The processing for generating the information concerning the product tree is an example of information processing concerning the product tree. In order to generate the information concerning the product tree, all kinds of linking among the pieces of product information need to be completed. When such conditions are satisfied, the information provision unit 114 can appropriately generate the information.

As described with reference to Fig. 2, in the product tree in the present embodiment, a supply relation among pieces of product information in a supply chain is represented by a tree diagram. The information provision unit 114 can generate, based on the product information, an image representing the tree diagram.

Further, when generating information concerning a product tree, the information provision unit 114 integrates traceability-related information defined in the respective kinds of product information and outputs a result of the integration.

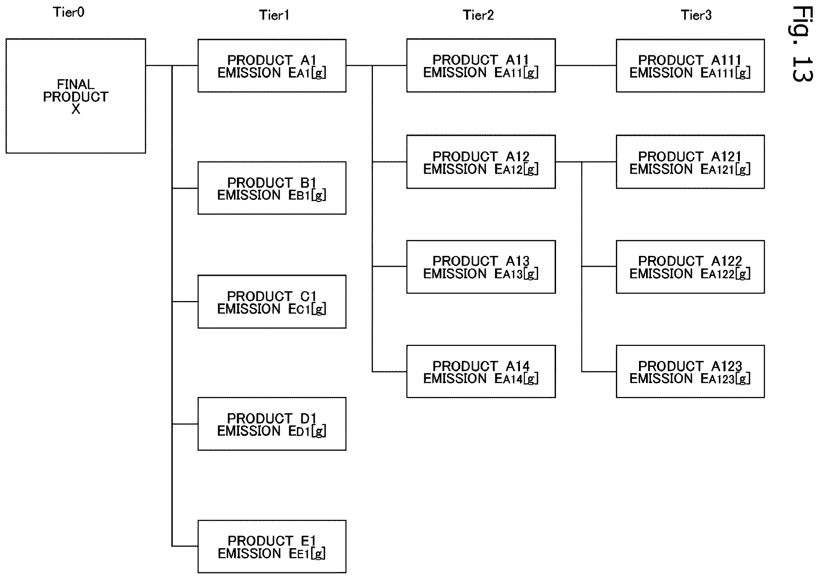

Here, the integration of the traceability-related information is described with reference to Fig. 13. Fig. 13 is a diagram for explaining a plurality of products constituting the final product X and amounts of carbon dioxide ($CO_2$) emitted in processes for producing the plurality of products. For example, it is assumed that $E_{A12}$ [g] of carbon dioxide is emitted in a process of producing the product A12 in the figure. It is assumed that the product is configured by three upstream products A121 to A123. An upstream product included in a certain product in this way is referred to as "included product" as well. Here, a total amount of carbon dioxide emitted until a certain target product is produced can be obtained by repeating, from a most upstream product, which is a leaf node, to the target product, processing for passing $CO_2$ emission correlated with an upstream product on to a downstream product among companies in two classes adjacent to one another with reference to the information product.

In an example illustrated in Fig. 13, when a target product is A12, a total amount of carbon dioxide emitted until the product A12 is produced can be calculated by totaling $CO_2$ emission corresponding to included products (the upstream products A121 to A123) with $CO_2$ emission corresponding to the product A12. That is, $CO_2$ emission integrated for the product A11 is calculated as follows.

$$I_{A12}=E_{A12}+E_{A121}\times U_{A121}+E_{A122}\times U_{A122}+E_{A123}\times U_{A123} \text{ [g]}$$

Here, it is assumed that $E_{A121}$, $E_{A122}$, and $E_{A123}$ are respectively $CO_2$ emissions per unit amount at the time when the products A121, A122, and A123 are produced. It is assumed that $U_{A121}$, $U_{A122}$, and $U_{A123}$ are respectively use amounts of the products A121, A122, and A123 used for production of the product A12. The use amounts are an example of a use amount of a material per production amount of a product included in the traceability-related information described above. $CO_2$ emission of a final product (a product of a most downstream company) can be obtained by sequentially executing the above calculation from the product of the most upstream company to the final product.

The same applies when the target product is the product A1. When the target product is A1, a total amount of carbon dioxide emitted in a manufacturing activity until the product A1 is produced can be calculated by integrating $CO_2$ emission corresponding to the product A1 and $CO_2$ emissions corresponding to the products A11, A12, A13, and A14, which are the included product.

An integrated value may be stored in the storage unit 12 separately from the product information or may be included in a part of the product information. That is, product information corresponding to the product A12 may retain both of $E_{A12}$, which is emission in a process alone, and $I_{A12}$, which is emission after the integration.

Traceability-related information after the integration is used again when integration is carried out for a downstream product. By executing this processing in respective classes starting from most upstream, traceability-related information (for example, a cumulative value of $CO_2$ emissions) is sequentially passed on in the downstream direction. Finally, since the traceability-related information is passed on to the final product, it is possible to obtain traceability-related information (for example, total emission of $CO_2$) corresponding to an entire period until the final product is produced.

Note that product information referred to when the traceability-related information is integrated is sometimes stored in both of the dedicated storage region and the shared storage region. In this case, it is preferable to refer to the product information stored in the dedicated storage region. This is because, in the product information stored in the shared storage region, an item not permitted to be referred to from the downstream company is likely to be omitted.

When the target product information is stored in both of the dedicated storage region and the shared storage region, it is preferable to write a result of the integration in the shared storage region. This is because, if the result of the integration is written in the dedicated storage region, the result of the integration cannot be referred to from the downstream company. By writing the result of the integration in the shared storage region, the result of the integration can be referred to from the downstream company to which the access authority is imparted. Note that what can be referred to is the result of the integration and traceability-related information inherent in the upstream product (for example, $CO_2$ emission in a production process for the upstream product) cannot be referred to from the downstream company because the traceability-related information is not written in the shared storage region unless the writing is permitted by the upstream company (for example, on the screen illustrated in Fig. 9A).

As described above, when information concerning a product tree is generated, the information provision unit 114 repeatedly executes processing for sequentially integrating, from most upstream toward most downstream, traceability-related information defined in respective kinds of product information. Note that, in the example described above, the emissions of carbon dioxide are exemplified as the target of the integration. However, the traceability-related information, which is the target of the integration, may be a recycling rate concerning a predetermined material, a score concerning due diligence, or the like. Note that, when the traceability-related information is a numerical value, the integration may be performed by numerical value calculation or, when the traceability-related information is information (for example, due diligence-related information) other than the numerical value, the integration may be mere information collection.

Further, the traceability-related information may not be included in the product information. For example, the product information may include information indicating a location of traceability-related information of a product corresponding to the product information (hereinafter, "location information". Typically, an address, a pointer, or the like). In this case, the integration may be collecting the location information included in the product information.

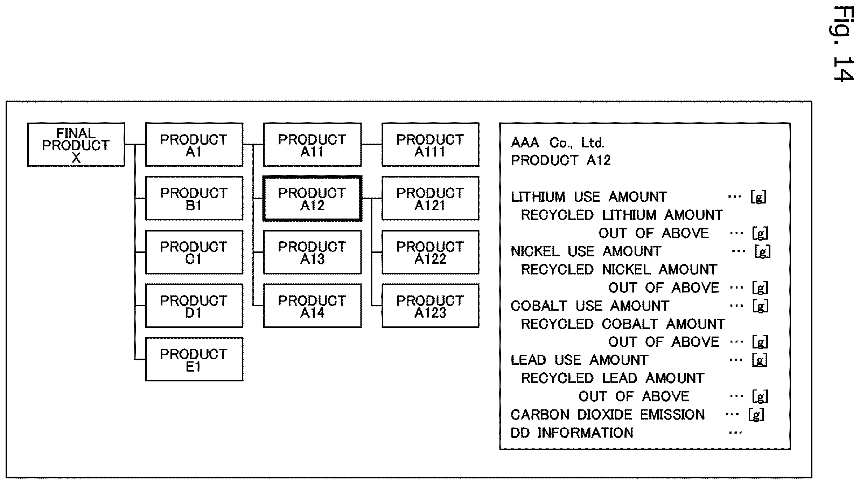

The information provision unit 114 may output the generated product tree in an image format. At the same time, the information provision unit 114 may output traceability-related information corresponding to any product. Fig. 14 is an example of a screen onto which a product tree is output by an image. The illustrated screen includes an image illustrating, with a tree diagram, a supply relation among a plurality of products constituting a final product. By selecting any product, it is possible to view traceability-related information corresponding to the product or an integration result of traceability-related information corresponding to an entire period until the product is produced (for example, a total value of emissions of carbon dioxide from most upstream). Such information can be output via the input and output device 14 included in the server apparatus 1 based on operation of the operator of the server apparatus 1.

Further, in response to a request from the company terminal 2 (the information acquisition unit 214), the information provision unit 114 may provide the generated product tree to the company terminal 2. Note that, in some case, it is inappropriate to disclose the entire product tree to a specific company. Thus, when providing the product tree to the company terminal 2 corresponding to a certain company, the information provision unit 114 may perform processing for not disclosing a range in which access authority from the company is absent.

For example, in the example illustrated in Fig. 13, it is assumed that the information provision unit 114 receives a disclosure request for a product tree from the company terminal 2 corresponding to a company that produces the product A12. Here, it is assumed that access authority is imparted to the company only for the products A121, A122, and A123. That is, the company cannot access the three products and product information other than A1, which is the downstream product. In this case, the information provision unit 114 provides, to the company terminal 2, a product tree in which information concerning the products without access authority are not disclosed.

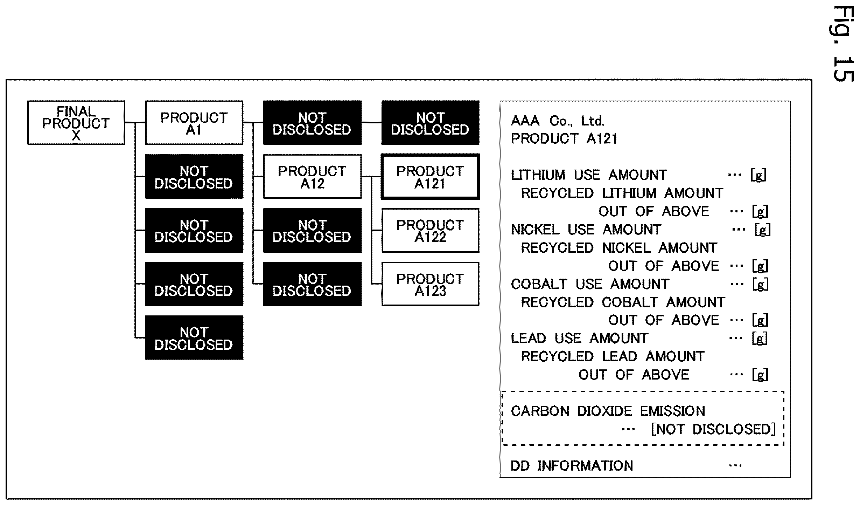

Fig. 15 is an example of a product tree in the case in which products without access authority are not disclosed. In the present example, the product tree is displayed in a state in which, for the products not disclosed, detailed information (or presence itself of the products) is concealed.

Note that, in a case in which, for example, presence of products is disclosed but access authority is not imparted to only a specific item in product information corresponding to the product, concealing processing is performed on only the specific item as indicated by a dotted line in the figure. In the illustrated example, it is indicated that emission of carbon dioxide at the time when the product A121 is produced is not disclosed.

On the other hand, even when a product (or an item) without access authority is present in the tree, the integration of the traceability-related information described above is executed without being affected by the presence of the product (or the item). For example, in the illustrated example, emission of carbon dioxide for the product A121 is not disclosed but this does not affect processing for calculating total emission of carbon dioxide for the product A12.

Note that the information provision unit 114 may generate a product tree for which the concealing processing has not been performed and then carry out the concealing processing for each of the companies based on the access authority imparted to each of the companies or may generate the product tree using authority of a relevant company.

For example, when a product tree is demanded from the company A, the information provision unit 114 may extract information from one or more storage regions to which the company A is permitted to access and generate the product tree.

[Processing flow]

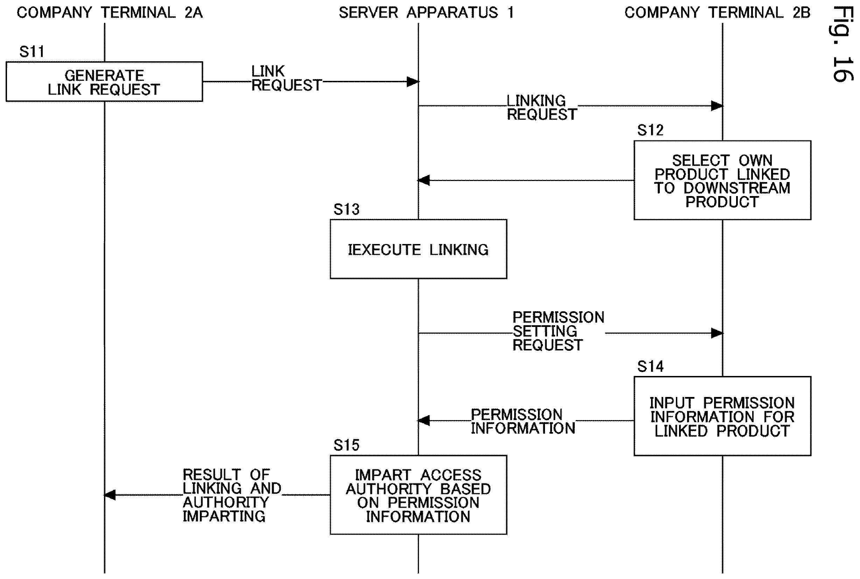

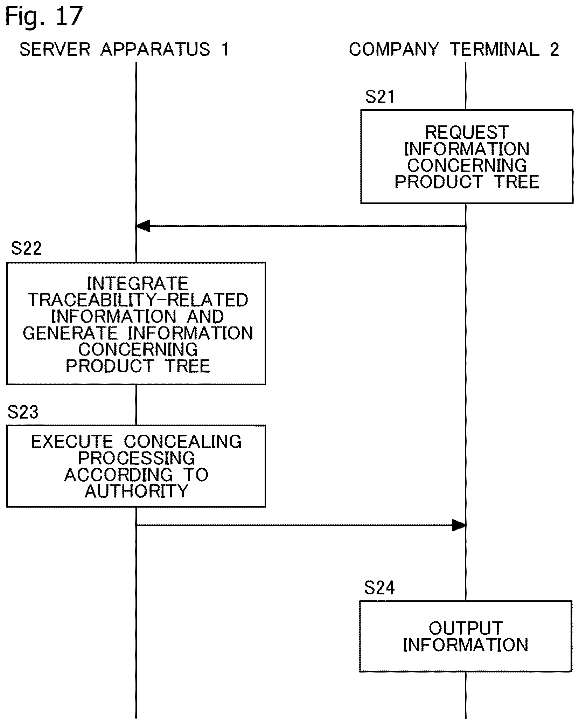

Subsequently, a flow of processing executed by the server apparatus 1 and the company terminals 2 is described with reference to Fig. 16 and Fig. 17. Fig. 16 is a sequence diagram corresponding to the first and second phases described above.

In an example, interaction of the server apparatus 1 and the company terminals 2 is started by operators of the companies logging in to the server apparatus 1 via the company terminals 2 using accounts of the companies corresponding to the company terminals 2. In this example, it is assumed that the operators of the companies have logged in to the server apparatus 1 using accounts of the own companies.

Here, the company terminal 2 used by the downstream company is represented as a company terminal 2A and the company terminal 2 used by the upstream company is represented as a company terminal 2B.

Note that it is assumed that, before starting the illustrated processing, the product information generation units 211 of the company terminals 2 have acquired product information of the own companies via the operators and transmitted the acquired product information to the server apparatus 1. The product information transmitted to the server apparatus 1 is received by the information collection unit 111 and stored in the storage unit 12. At this time, the information collection unit 111 stores the product information in a storage region for which access authority is imparted to only a company that produces a product corresponding to the product information.

In step S11, the request unit 212 of the company terminal 2A transmits data (a link request) for requesting the server apparatus 1 to link the product information transmitted to the server apparatus 1 with the upstream product. The link request includes a company ID of the own company and a product ID.

The server apparatus 1 that has received the link request transmits, based on the link request, a linking request to the company terminal 2B belonging to an adjacent Tier. The linking request is a request for causing the upstream company to respond with an upstream product corresponding to a downstream product. The linking request includes the product ID included in the link request (that is, an identifier of the downstream product).

In step S12, the company terminal 2B (the information setting unit 213) that has received the linking request responds by selecting an own product having a supply relation with a designated product (a product designated by the downstream company). In this step, the server apparatus 1 may provide the user interface screen described with reference to Fig. 9A to the company terminal 2B and cause the company terminal 2B to designate a combination of any product and an upstream product linked with the product. The information setting unit 213 transmits, to the server apparatus 1, in a pair, an identifier of a product that is a link source (the downstream product) and an identifier of the upstream product that is a link destination. Accordingly, the server apparatus 1 can specify the downstream product and the upstream product linked with each other.

In step S13, the linking unit 112 of the server apparatus 1 updates the stored product information based on the link request and the response thereto and reflects link content between the pieces of product information. Linking of the pieces of product information may be performed by storing information (an identifier, a pointer, or the like) concerning the upstream product in link-related information included in the product information of the downstream product.

Subsequently, the server apparatus 1 transmits a permission setting request to the company terminal 2B. The permission setting request requests, for product information of the upstream product that is a link target, transmission of information (permission information) for setting access authority from the downstream company.

In step S14, the company terminal 2B (the information setting unit 213) that has received the permission setting request receives, for an own product responded as a link target, setting whether to permit access from the downstream company (step S14).

In this step, the company terminal 2B (the information setting unit 213) designates, out of products stored in a dedicated storage region of the own company and linked with the downstream product, a product for which access from the downstream company is permitted and an item. In other words, an own product not linked with the downstream product relating to the link request is not presented as a selection.

The operator of the upstream company sets, for example, via the interface exemplified in Fig. 9B, a company for which access is permitted, a target product, and an item. The information setting unit 213 generates permission information including input content and transmits the permission information to the server apparatus 1.

In step S15, the server apparatus 1 (the authority setting unit 113) that has received the permission information imparts access authority to target product information based on the received permission information. In this step, as described with reference to Fig. 11, the authority setting unit 113 copies the target product information to a storage region where access authority is imparted to a plurality of companies to impart, to any company, access authority to any product information. When a storage region where appropriate access authority is imparted is absent, the authority setting unit 113 may perform processing for generating a storage region anew and imparting access authority to an appropriate company.

Note that, when the product information is copied in this step, additional information may be given. For example, a product number or the like is sometimes included in the product information generated in the upstream company. However, since the product number or the like is used in the upstream company, the downstream company sometimes cannot use the product number or the like as it is. For that reason, for example, a product number or the like used in the downstream company may be added to the copy target product information as additional information.

When the imparting of the access authority is completed, the server apparatus 1 transmits, to the company terminal 2A, a notification to the effect that the linking of the pieces of product information and the imparting of the access authority have been completed.

Fig. 17 is a sequence diagram corresponding to processing of the company terminal 2 for demanding the server apparatus 1 to provide information concerning a product tree.

First, in step S21, the company terminal 2 (the information acquisition unit 214) requests the server apparatus 1 to provide information concerning a product tree. The request includes, for example, an identifier of a target product. The target product may be a final product or may be a product (an intermediate product) other than the final product.

The server apparatus 1 (the information provision unit 114), which receives the request, generates information concerning a product tree according to the processing described above (step S22). At this time, the information provision unit 114 executes processing for integrating, from most upstream to most downstream, traceability-related information defined in respective kinds of product information. A result of the integration is reflected on the respective kinds of product information.

Subsequently, in step S23, based on access authority of a target company, processing for concealing information for which access authority is not imparted is executed. For example, when presence itself of product information of other companies is not disclosed to a certain company, processing for concealing the presence of the product information is executed. When only a specific item included in the product information is not disclosed, processing for concealing content of the item is executed.

Information concerning a product tree subjected to the concealing processing is provided to the company terminal 2 (the information acquisition unit 214) and output (step S24).

As described above, in the present embodiment, the server apparatus 1 executes, based on a request from the company terminal of the downstream company, the processing for linking the pieces of product information (the first phase) and the processing for imparting the access authority based on a result of the linking (the second phase). The linking of the pieces of product information is performed according to information having low confidentiality such as a product number. The upstream company selects a product for which the access authority is imparted out of a relation linked in the server apparatus 1. With such a configuration, it is possible to suppress wrong operation of imparting the access authority for a non-target product by mistake.

(Second Embodiment)

In the first embodiment, the server apparatus 1 stores the account information of the companies included in the supply chain and the plurality of company terminals 2 log in to the server apparatus 1 using the account information.

On the other hand, when joining to and withdrawal from the supply chain often occur, account information sometimes cannot be registered in the server apparatus 1 at appropriate timing. For example, even when the downstream company desires to link an own product with an upstream product, when account information of the upstream company is not registered in the system, the downstream company cannot perform the linking. This is because product information corresponding to the upstream product and access permission to the upstream product are absent. A second embodiment is an embodiment in which, in order to cope with this problem, based on a request from a company already participating in a supply chain, account information of a company participating in the supply chain anew is registered.

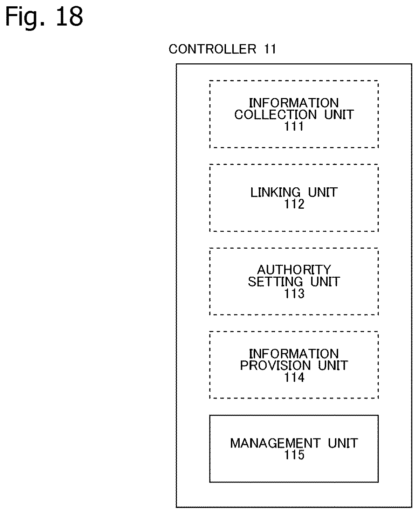

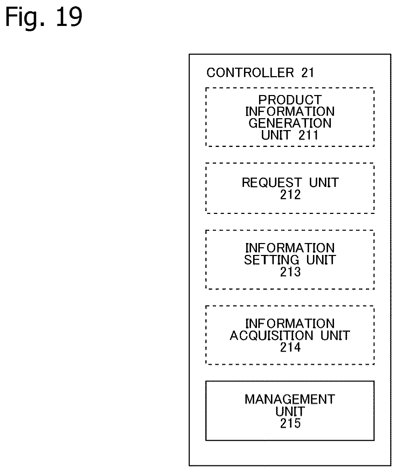

Fig. 18 is a diagram illustrating a software configuration of the server apparatus 1 (the controller 11) according to the second embodiment. Fig. 19 is a diagram illustrating a software configuration of the company terminal 2 (the controller 21) according to the second embodiment. In the second embodiment, the server apparatus 1 (the controller 11) further includes a software module of a management unit 115. The functional module may be implemented by a program stored in the storage unit 12 being executed by the controller 11 (a CPU). In the second embodiment, the company terminal 2 (the controller 21) further includes a software module of a management unit 215. The functional module may be implemented by a program stored in the storage unit 22 being executed by the controller 21 (a CPU).

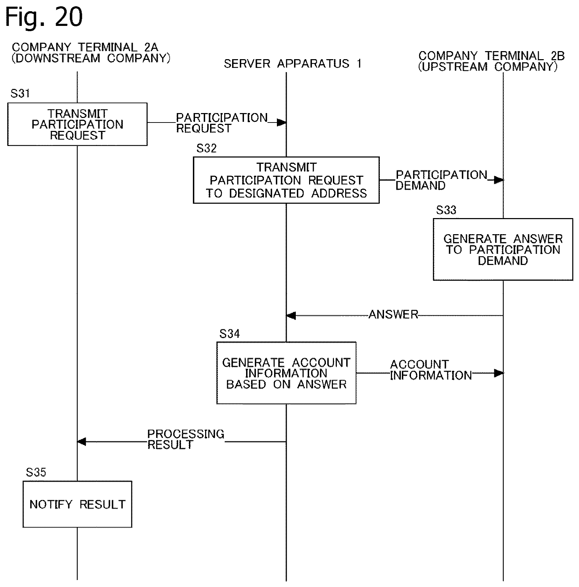

Fig. 20 is a sequence diagram for explaining processing performed by the server apparatus 1 and the company terminals 2 in the second embodiment. Note that, here, a company terminal corresponding to a downstream company is represented as the company terminal 2A and a company terminal corresponding to an upstream company is represented as the company terminal 2B. The upstream company is participating in the supply chain but is in a state in which account information is not registered in the server apparatus 1.

Here, when the downstream company desires to link an own product with the upstream product, first, the downstream company needs to register account information of the upstream company in the server apparatus 1 and thereafter have an operator of the upstream company register product information of the upstream product.

First, in step S31, the company terminal 2A (the management unit 215) transmits a participation request to the server apparatus 1. The participation request includes information for identifying the upstream company and a contact (a mail address or the like) of the upstream company. The server apparatus 1 (the management unit 115) that has received the participation request transmits a participation demand to a designated address (step S32). The participation demand includes guidance concerning registration of account information.

The participation demand is received by the company terminal 2B (the management unit 215). The management unit 215 of the company terminal 2B outputs guidance to the operator based on the received participation demand and receives an answer including possibility of participation in the system from the operator. The answer is transmitted to the server apparatus 1 (the management unit 115).

When answer content is "participation possible", the server apparatus 1 (the management unit 115) generates account information corresponding to the upstream company and notifies the account information to the company terminal 2B and notifies a result of the participation possibility to the company terminal 2A (step S34). When the answer content is "participation impossible", the server apparatus 1 (the management unit 115) notifies a result of the participation possibility to the company terminal 2A.

The company terminal 2A outputs the result received from the server apparatus 1 (step S35). Accordingly, an operator of the downstream company can learn that the upstream company has participated (or has failed in participating) in the system. The upstream company becomes capable of performing, using the registered account information, registration of product information, registration of permission information, linking of the product information, or the like described above.

(Modifications)

The embodiments described above are only examples. The present disclosure can be changed as appropriate and carried out without departing from the gist of the present disclosure. For example, the processing and the means described in the present disclosure can be freely combined and carried out as long as a technical contradiction does not occur.

In the description of the embodiment, the server apparatus 1 stores the product information in the database. However, the product information may be stored by means other than the database.

In the description of the embodiments, in response to the link request being transmitted from the company terminal 2 of the downstream company, the server apparatus 1 executes the phase of performing linking of the pieces of product information and the phase of receiving the setting concerning the access permission. However, both the phases do not always have to be executed with the link request as a trigger. For example, the processing illustrated in Fig. 16 may be started from a stage when the linking of the pieces of product information has been completed. The linking of the pieces of product information may be executed beforehand based on, for example, a product list acquired from the outside.

When the linking is executed beforehand, the company terminal 2 of the downstream company may transmit, instead of the link request, to the server apparatus 1, a request for demanding only imparting of access authority and perform the processing in step S15 and subsequent steps with the request as a trigger. The request may include designation of a downstream product linked with a target upstream product. Even in this case, access authority cannot be imparted to a product not linked with a target downstream product.

In the description of the embodiments, the permission setting request is transmitted from the server apparatus 1 to the company terminal 2 of the upstream company and the company terminal 2 of the upstream company transmits the permission information in response to the permission setting request. However, the transmission of the permission information may be triggered from the company terminal 2 of the upstream company.

In the example of the embodiment, the identifier of the downstream product that is the target of the linking is included in the link request. However, identifiers of both of the downstream product and the upstream product that are targets of linking may be included in the link request. When a product that is a link destination can be specified on the downstream company side (with a product number or the like), the upstream product can also be designated from the downstream company side. In this case, in the upstream company, the operation for designating a product illustrated in Fig. 9A may not be performed and operation for approving a combination of products may be performed. Further, operation performed in the upstream company may be automated.

In the example of the embodiment, as illustrated in Fig. 8, the link-related information is included in the product information. However, the link-related information, that is, information representing a link relation between products may be stored separately from the product information. For example, data not including specific information concerning the products and defining only the link relation may be stored separately from the product information. This data may be stored in a storage region accessible from all the companies. That is, only the structure of a product tree may be disclosed and specific data included in the product tree may be acquired according to access authority imparted to the companies.

In the description of the embodiments, a form in which the server apparatus 1 completes the product tree is exemplified. However, the role of the server apparatus 1 may be distributed to and arranged in a plurality of company terminals 2. For example, the product information may be stored by a distributed database that uses a blockchain infrastructure. In this case, a product information database may be configured by the plurality of company terminals 2. In this case, the processing in the phases described above may be executed using a smart contract. For example, the processing in the first phase may be executed by being triggered by an account of a certain company writing a link request in a database. The processing in the second phase may be executed by being triggered by an account of a certain company writing permission information in the database.

Storage regions where the pieces of product information are stored may also be distributed to and arranged in the plurality of company terminals 2. In this case, a dedicated storage region may be arranged only in the company terminal 2 of a company corresponding to the dedicated storage region. Shared storage regions may be distributed to and arranged in a plurality of company terminals 2 relating to sharing.

Further, in the description of the embodiments, an example in which the access to any product information is permitted to the companies adjacent to each other in the supply chain is described. However, companies not adjacent to each other in the supply chain may share product information. For example, when information sharing is necessary between companies for the purpose of compliance or the like, companies not having a direct transaction relation may share a specific product information. Even in this case, as in the first embodiment, a shared storage region where access authority is imparted to the companies is provided and necessary data is copied to the shared storage region. The shared storage region can be generated based on consent of a company on a side where product information is referred to. Note that a secret key may be used for access control for the dedicated storage region and the shared storage region. In this case, electronic authentication of the access control may be performed by a public key authentication infrastructure. When the blockchain infrastructure is used for the storage regions, this access control may be executed by smart contract.

The setting of the access authority for the storage region may be implemented by the operating system of the server apparatus 1 or may be implemented by another authentication scheme. For example, a public key encryption scheme and the like can also be used. When the system is implemented using the blockchain infrastructure, imparting of access authority may be performed by an electronic key.

In the embodiment described above, the plurality of companies included in the supply chain are described as the companies that produce products. However, the companies included in the supply chain do not always need to be companies that produce products. For example, companies that perform transportation, import, storage, wholesale, and the like of products may be included in the companies constituting the supply chain. In an example, some companies among the plurality of companies may be companies that do not execute a manufacturing process, such as a trading company, a sales agent, and an import agent, and may receive a product from a company located in an immediately upper class (an upstream company) and deliver the product to a company located in an immediately lower class (a downstream company).

In the embodiment described above, the supply chain of the product relating to an automobile is assumed, the OEM manufacturer is described as the most downstream company and the company that supplies components, materials, assemblies, and the like is described as the supplier. However, the companies belonging to the supply chain are not always limited to these companies. Companies in the classes may be determined as appropriate according to a product and the like. Manufacturing activities carried out in the companies until a final product is obtained may be determined as appropriate according to an embodiment and may include all activities that can be performed until the final product is obtained, such as digging, machining, assembling, transportation, and storage.

In the embodiment described above, access control of the companies is implemented by providing the dedicated storage region and the shared storage region. However, a method of implementing the access control is not limited to such an example. Any method may be used for the access control.

In the description of the embodiments, it is assumed that the upstream company and the downstream company are different companies, that is, the upstream product and the downstream product are produced by the different companies. However, in the embodiments described above, the most upstream company can be in the position of the upstream company and the most downstream company can be in the position of the downstream company. Companies other than the most upstream company and the most downstream company can be in the positions of both of the upstream company and the downstream company. For that reason, in the second phase described above, the company terminals 2 of the companies may set the companies themselves (target companies) as upstream companies and transmit, to the server apparatus 1, permission information including designation of their own downstream companies for which access to product information concerning their own products is permitted. Their own products are an example of the first target product of the target company and the product information concerning their own products is an example of the first product information concerning the first target product. In response to the permission information, the server apparatus 1 may execute the setting of the access authority.

Their own products in this scene are an example of the second target product of the target company and the product information concerning their own products is an example of the second product information concerning the second target product. When the first target product and the second target product are the same, the first product information and the second product information may be the same. When the first target product and the second target product are different, the first product information and the second product information may be different.

In the embodiment described above, an example of calculation of $CO_2$ emission (a CFP value) is described. The CFP value may be calculated by the following calculation formula.

CFP value of Tier N-1 = own company measured CFP value of Tier N-1 + CFP value of $\Sigma_k$ (k company (Tier N)) $\times$ use amount uk in Tier N-1

Here, "CFP value of Tier N-1" indicates a result obtained by integrating a CFP value of an upstream company (k company (Tier N)) and a CFP value of the own company. The own company measured CFP value indicates a CFP value included in product information of the companies. When Tier N is a most upstream company, "CFP value of Tier N" is a CFP value included in product information of the company. In other cases, "CFP value of Tier N" is a result obtained by further integrating a CFP value of an upstream company (Tier N+1) and a CFP value included in product information of the company. By setting Tier N in a most upstream company (a termination company) and repeating the calculation up to N=1, it is possible to obtain a CFP value of a Tier 0 product (=a final product).

In the embodiment described above, the server apparatus 1 may execute calculation of a recycling rate and due diligence (a score) together with or instead of the calculation of the $CO_2$ emission (the CFP value). The recycling rate may be calculated by the following calculation formula.

"(Recycling rate in a Tier N-1 product for a target substance) = {(total use amount in Tier N-1) X (recycling rate in Tier N-1) + $\Sigma_k$ (total use amount in k company (Tier N) $\times$ recycling rate in k company (Tier N) $\times$ use amount $u_k$ in Tier N-1)} $\div$ {total use amount in Tier N-1 + $\Sigma_k$ (total use amount in k company (Tier N) $\times$ use amount $u_k$ in Tier N-1)} = {recycled material use amount in Tier N-1 + $\Sigma k$ (recycled material use amount in k company (Tier N) $\times$ use amount $u_k$ in Tier N-1)} $\div$ {total use amount in Tier N-1 + $\Sigma k$ (total use amount in k company (Tier N) $\times$ use amount $u_k$ in Tier N-1)}"

The recycled material use amount indicates a use amount of a recycled material of a target substance. Like the CFP value, a recycling rate in a final product for the target substance can be calculated by sequentially calculating the recycling rate from a most upstream company (a termination company). The score of due diligence (a DD score) can be integrated by the same calculation as the calculation for the CFP value and the recycling rate. In an example, a DD score (an integration result) in the final product can be obtained by substituting the CFP value with the DD score and sequentially calculating the DD score from the most upstream company (the termination company).

Note that, in the embodiment described above, traceability-related information of the companies (Tier N-1) themselves excluding the most upstream company may not be stored in a shared storage region between the companies and downstream companies of the companies and integration results (CFP values of Tier N-1 and recycling rates in the Tier N-1 product for the target substance) of the companies may be stored in a shared storage region between the companies and downstream companies (Tier N-2) of the companies. Accordingly, it is possible to obtain traceability-related information (an integration result) in the final product without disclosing traceability-related information of the companies themselves.

In the embodiment described above, it is assumed that the companies order a certain material from one company. However, in the embodiment described above, an order form of the companies is not limited to such an example. At least some of the companies belonging to the supply chain may order the same product from a plurality of upstream companies and selectively use obtained upstream products for own products. For example, in the example illustrated in Fig. 13, a product A11_1, a product A11_2, or a product A11_3 in Tier 2 may be selectively used for the product A1 in Tier 1. In this case, the server apparatus 1 may retain a link relation for each of patterns to be used. In the example described above, the server apparatus 1 may retain, for the product A1 in Tier 1, link information like a pattern 1 "the product A11_1 in Tier 2, ⋯", a pattern 2 "the product A11_2, ⋯", and a pattern 3 "the product A11_3, ⋯". According to this, the server apparatus 1 may execute calculation (integration) of the traceability-related information for each of the patterns. In this case, in an example, the server apparatus 1 may output a calculation result for each of the patterns. In another example, the server apparatus 1 may calculate, from the calculation result, statistic amounts such as a maximum value, a minimum value, an average value, a variance, a standard deviation, and a median value and output the calculated statistic amounts.

In the embodiment described above, the traceability-related information (in particular, the CFP value) may be formed by primary data or may be formed by secondary data (inventory data). The primary data is a measured value and the secondary data is a reference value used when the measured value is not obtained. In this case, the calculation (the integration) of the traceability-related information described above may include calculating a primary data ratio of traceability-related information obtained for the final product. The primary data ratio may be calculated by simple ratio calculation or may be calculated by weight calculation by substituting the CFP value with primary data ratios of the companies in the arithmetic expression for the CFP value and sequentially calculating the primary data ratio from the most upstream company.

Processing described as being performed by one apparatus may be shared and executed by a plurality of apparatuses. Alternatively, processing described as being performed by different apparatuses may be executed by one apparatus. In a computer system, it is possible to flexibly change what kinds of hardware components (server components) implement functions.

The present disclosure can also be implemented by supplying a computer program implementing the functions described in the embodiments described above to a computer and one or more processors included in the computer reading and executing the program. Such a computer program may be provided to the computer by a non-transitory computer-readable storage medium connectable to a system bus of the computer or may be provided to the computer via a network. The non-transitory computer-readable storage medium includes, for example, a disk of any type such as a magnetic disk (a floppy (registered trademark) disk, a hard disk drive (HDD), or the like) or an optical disk (a CD-ROM, a DVD disk, a blue-ray disk, or the like), a read only memory (ROM), a random access memory (RAM), an EPROM, an EEPROM, a magnetic card, a flash memory, an optical card, and a medium of any type suitable for storing an electronic instruction.

[Description of the Reference Numerals and Symbols]

1 Server apparatus
2 Company terminal
11, 21 Controller
12, 22 Storage unit
13, 23 Communication module
14, 24 Input and output device

Claims

1. A server apparatus comprising: a memory configured to store, for each of companies included in a supply chain, product information concerning products of the companies; and a controller,

the supply chain including a first company and a second company,
the memory storing first product information of the first company and second product information of the second company,
the controller being configured to execute:

acquiring link information for linking first identification information included in the first product information and second identification information included in the second product information; and
receiving, in response to the first identification information and the second identification information being linked in the link information, setting concerning access permission for the first company to the second product information.

2. The server apparatus according to claim 1, wherein the controller is configured to receive, from an account of the first company, a permission demand for demanding permission of access to the second product information for the second company, the permission demand including first identification information of the first product information linked with the second product information that is a target of the demand.

3. The server apparatus according to claim 2, wherein the acquiring the link information is configured by:

receiving, as a response to the permission demand, from an account of the second company, a replay including second identification information included in the second product information to be a target for which access is permitted to the first company; and

linking the first identification information and the second identification information according to the reply.

4. The server apparatus according to any of claims 1 to 3, wherein the receiving the setting concerning the access permission to the second product information includes receiving, from an account of the second company, permission information designating information for which access is permitted to the first company among pieces of information included in the second product information.

5. The server apparatus according to claim 4, wherein the first identification information and the second identification information are identifiers of products indicated by the first product information and the second product information.

6. The server apparatus according to claim 4, wherein

a first storage region where access from companies other than an allocated company is prohibited and a second storage region where access is permitted to the first company and the second company are provided in the memory, and

the product information of the companies is stored in the first storage region for the companies corresponding thereto.

7. The server apparatus according to claim 6, wherein the controller copies, in response to receiving the permission information for permitting the first company to access the second product information, the second product information, to which the access is permitted, from the first storage region allocated to the second company to the second storage region accessible from the first company and the second company that are designated.

8. The server apparatus according to claim 4, wherein
the controller is configured to further execute:

receiving, from an account of the first company, a participation request including designation of the second company;

transmitting, in response to the received participation request, a participation demand to an address of the designated second company; and

generating an account of the second company in response to an answer to the participation demand, and

the receiving the permission information from the account of the second company is executed after executing the generating the account of the second company.

9. An information processing method executed by a server apparatus including a memory configured to store, for each of companies included in a supply chain, product information concerning products of the companies,

the supply chain including a first company and a second company,

the memory storing first product information of the first company and second product information of the second company,

the information processing method comprising:

acquiring link information for linking first identification information included in the first product information and second identification information included in the second product information; and

receiving, in response to the first identification information and the second identification information being linked in the link information, setting concerning access permission for the first company to the second product information.

10. The information processing method according to claim 9, further comprising receiving, from an account of the first company, a permission demand for demanding permission of access to the second product information for the second company, the permission demand including first identification information of the first product information linked with the second product information that is a target of the demand.

11. The information processing method according to claim 10, wherein the acquiring the link information is configured by:

receiving, as a response to the permission demand, from an account of the second company, a replay including second identification information included in the second product information to be a target for which access is permitted to the first company; and

linking the first identification information and the second identification information according to the reply.

12. The information processing method according to any of claims 9 to 11, wherein the receiving the setting concerning the access permission to the second product information includes receiving, from an account of the second company, permission information designating information for which access is permitted to the first company among pieces of information included in the second product information.

13. The information processing method according to claim 12, wherein the first identification information and the second identification information are identifiers of products indicated by the first product information and the second product information.

14. The information processing method according to claim 12, wherein

a first storage region where access from companies other than an allocated company is prohibited and a second storage region where access is permitted to the first company and the second company are provided in the memory, and

the product information of the companies is stored in the first storage region for the companies corresponding thereto.

15. The information processing method according to claim 14, wherein, in response to receiving the permission information for permitting the first company to access the second product information, the second product information, to which the access is permitted, is copied from the first storage region allocated to the second company to the second storage region accessible from the first company and the second company that are designated.

16. The information processing method according to claim 12, further comprising:

receiving, from an account of the first company, a participation request including designation of the second company;

transmitting, in response to the received participation demand, a participation demand to an address of the designated second company; and

generating an account of the second company in response to an answer to the participation demand, and the receiving the permission information from the account of the second company is executed after executing the generating the account of the second company.

17. An information processing method executed by an information processing apparatus of a target company capable of communicating with a server apparatus configured to store, for each of companies included in a supply chain, product information concerning products of the companies,

the supply chain including a first company and a second company,

the server apparatus storing first product information of the first company and second product information of the second company,

the information processing method comprising: when the target company is the second company, transmitting, in response to first identification information included in the first product information and second identification information included in the second product information being linked in the server apparatus, to the server apparatus, setting concerning access permission for the first company to the second product information.

18. The information processing method according to claim 17, further comprising, in response to a permission demand for demanding permission of access to the second product information, the permission demand including first identification information of the first product information linked with the second product information that is a target of the demand, being performed from an account of the first company, transmitting second identification information of the second product information to the server apparatus to cause the server apparatus to link the first identification information included in the first product information and the second identification information included in the second product information.

19. The information processing method according to claim 17, wherein the transmitting the setting concerning the access permission to the second product information to the server apparatus includes transmitting, to the server apparatus, permission information designating information for permitting access for the first company among pieces of information included in the second product information.

20. A program for causing the information processing apparatus to execute the information processing method according to any of claims 17 to 19.

Fig. 1

SERVER APPARATUS 1

COMPANY TERMINAL 2

COMPANY TERMINAL 2

COMPANY TERMINAL 2

COMPANY TERMINAL 2

DELIVERY

DELIVERY

DELIVERY

OEM COMPANY (Tier0)

COMPANY A (Tier1)

COMPANY B (Tier2)

COMPANY C (Tier3)

DOWNSTREAM

UPSTREAM

EP 4 672 129 A1

Fig. 2

Fig. 3

SERVER APPARATUS

PRODUCT INFORMATION A

PRODUCT INFORMATION B

PRODUCT INFORMATION C

①TRANSMIT INFORMATION (PRODUCT INFORMATION) CONCERNING PRODUCT MANUFACTURED BY OWN COMPANY

②DESIGNATE OWN PRODUCT AND REQUEST LINKING

③INTERACT WITH COMPANY TERMINAL OF UPSTREAM COMPANY AND EXECUTE LINKING OF PIECES OF PRODUCT INFORMATION

④INTERACT WITH COMPANY TERMINAL OF UPSTREAM COMPANY AND SET ACCESS AUTHORITY TO PRODUCT INFORMATION

①

COMPANY TERMINAL

PRODUCT INFORMATION A

COMPANY TERMINAL

PRODUCT INFORMATION B

COMPANY A THAT PRODUCES DOWNSTREAM PRODUCT A (Tire N)

COMPANY B THAT PRODUCES UPSTREAM PRODUCT B (Tier N+1)

DOWNSTREAM SIDE

UPSTREAM SIDE

EP 4 672 129 A1

Fig. 4

SERVER APPARATUS 1

CONTROLLER 11

CPU

RAM

ROM

STORAGE UNIT 12

PROGRAM

PRODUCT
INFORMATION

ACCOUNT
INFORMATION

COMMUNICATION
MODULE 13

INPUT AND OUTPUT
DEVICE 14

EP 4 672 129 A1

Fig. 5

COMPANY TERMINAL 2

CONTROLLER 21
- CPU
- RAM
- ROM

STORAGE UNIT 22
- PROGRAM

COMMUNICATION MODULE 23

INPUT AND OUTPUT DEVICE 24

Fig. 6

SERVER APPARATUS 1

CONTROLLER 11

INFORMATION
COLLECTION UNIT
111

LINKING UNIT
112

AUTHORITY
SETTING UNIT
113

INFORMATION
PROVISION UNIT
114

STORAGE UNIT 12

STORAGE REGION

PRODUCT
INFORMATION

ACCOUNT
INFORMATION

STORAGE REGION

PRODUCT
INFORMATION

STORAGE REGION

EP 4 672 129 A1

Fig. 7

COMPANY TERMINAL 2

CONTROLLER 21

PRODUCT
INFORMATION
GENERATION
UNIT 211

REQUEST UNIT
212

INFORMATION
SETTING UNIT
213

INFORMATION
ACQUISITION UNIT
214

# Fig. 8

| COMPANY ID | | C001 |
|---|---|---|
| COMPANY NAME | | COMPANY A |
| PRODUCT ID | | P001 |
| PRODUCT NAME | | PRODUCT A |
| LINK-RELATED INFORMATION | UPSTREAM PRODUCT INFORMATION | (POINTER) |
| TRACEABILITY -RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | PRODUCTION TIME CO2 EMISSION | X[g] |
| | DD INFORMATION | ... |
| ... | | ... |

Fig. 9A

PRODUCT REGISTRATION/LINK DESTINATION SETTING

DOWNSTREAM
COMPANY          C00001

PRODUCT
NUMBER           P00001

UPSTREAM PRODUCT

☑ P10001
☐ P10002
☐ P10003
☐ P10004
☐ P10005
☐ ...

TRANSMIT

Fig. 9B

PRODUCT REGISTRATION/DISCLOSURE DESTINATION SETTING

PRODUCT NUMBER | P0001

COMPANY PERMITTED TO ACCESS

☑ A Co., Ltd.

PERMISSION ITEMS

☑ COMPANY NAME
☑ OWN COMPANY PRODUCT NUMBER
☑ PARTNER PRODUCT NUMBER
☑ REQUIRED AMOUNT
☑ DISCHARGE ORIGINAL UNIT
☑ ***

TRANSMIT

Fig. 10

PERMISSION INFORMATION
GENERATED BY COMPANY TERMINAL

| COMPANY ID | C001 |
|---|---|
| PRODUCT ID | P001 |
| COMPANY ID FOR WHICH ACCESS IS PERMITTED | ... |
| ITEM NAME FOR WHICH ACCESS IS PERMITTED | ... |

Fig. 11

EP 4 672 129 A1

(1) (FROM COMPANY A)
PRODUCT
INFORMATION A

(FROM COMPANY B)
PRODUCT
INFORMATION B

INFORMATION
COLLECTION UNIT
111

(2)
(FROM COMPANY A)
LINK REQUEST TO
PRODUCT
INFORMATION A

LINKING UNIT
112

(3)
(TO COMPANY B)
LINK DATA FOR
LINKING PIECES OF
PRODUCT
INFORMATION
A AND B

STORAGE REGION B
DEDICATED TO
COMPANY B

PRODUCT
INFORMATION B

STORAGE REGION AB
SHARED BY
COMPANIES A AND B

PRODUCT
INFORMATION B

STORAGE REGION A
DEDICATED TO
COMPANY A

PRODUCT
INFORMATION A

IMPART ACCESS AUTHORITY
TO COMPANY A BY COPYING
PRODUCT INFORMATION
TO SHARED REGION

AUTHORITY
SETTING UNIT
113

(4)
(FROM COMPANY B)
PERMISSION INFORMATION
TO EFFECT THAT ACCESS FROM
COMPANY A IS PERMITTED TO
PRODUCT INFORMATION B

INFORMATION
PROVISION UNIT
114

PRODUCT TREE

(5) GENERATE PRODUCT TREE
BASED ON PRODUCT INFORMATION

## Fig. 12

| COMPANY ID | | C001 |
|---|---|---|
| COMPANY NAME | | COMPANY A |
| PRODUCT ID | | P001 |
| PRODUCT NAME | | PRODUCT A |
| LINK-RELATED INFORMATION | UPSTREAM PRODUCT INFORMATION | (POINTER) |
| TRACEABILITY-RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | PRODUCTION TIME CO2 EMISSION | X[g] |
| | DD INFORMATION | ... |
| ... | | ... |

| COMPANY ID | | C002 |
|---|---|---|
| COMPANY NAME | | COMPANY B |
| PRODUCT ID | | P002 |
| PRODUCT NAME | | PRODUCT B |
| LINK-RELATED INFORMATION | UPSTREAM PRODUCT INFORMATION | (POINTER) |
| TRACEABILITY-RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | PRODUCTION TIME CO2 EMISSION | X[g] |
| | DD INFORMATION | ... |
| ... | | ... |

# Fig. 13

Tier3

PRODUCT A111
EMISSION EA111[g]

PRODUCT A121
EMISSION EA121[g]

PRODUCT A122
EMISSION EA122[g]

PRODUCT A123
EMISSION EA123[g]

Tier2

PRODUCT A11
EMISSION EA11[g]

PRODUCT A12
EMISSION EA12[g]

PRODUCT A13
EMISSION EA13[g]

PRODUCT A14
EMISSION EA14[g]

Tier1

PRODUCT A1
EMISSION EA1[g]

PRODUCT B1
EMISSION EB1[g]

PRODUCT C1
EMISSION EC1[g]

PRODUCT D1
EMISSION ED1[g]

PRODUCT E1
EMISSION EE1[g]

Tier0

FINAL
PRODUCT
X

Fig. 14

Fig. 15

EP 4 672 129 A1

```
┌──────────┐   ┌──────────┐   ┌──────────┐   ┌──────────┐
│  FINAL   │   │ PRODUCT  │   │   NOT    │   │   NOT    │
│ PRODUCT  ├───┤   A1     ├───┤ DISCLOSED│───┤ DISCLOSED│
│    X     │   │          │   │          │   │          │
└──────────┘   └──────────┘   └──────────┘   └──────────┘
               ┌──────────┐   ┌──────────┐   ┌──────────┐
               │   NOT    │   │ PRODUCT  │   │ PRODUCT  │
               │ DISCLOSED│   │   A12    │   │   A121   │
               └──────────┘   └──────────┘   └──────────┘
               ┌──────────┐   ┌──────────┐   ┌──────────┐
               │   NOT    │   │   NOT    │   │ PRODUCT  │
               │ DISCLOSED│   │ DISCLOSED│   │   A122   │
               └──────────┘   └──────────┘   └──────────┘
               ┌──────────┐   ┌──────────┐   ┌──────────┐
               │   NOT    │   │   NOT    │   │ PRODUCT  │
               │ DISCLOSED│   │ DISCLOSED│   │   A123   │
               └──────────┘   └──────────┘   └──────────┘
               ┌──────────┐
               │   NOT    │
               │ DISCLOSED│
               └──────────┘
```

AAA Co., Ltd.
PRODUCT A121

LITHIUM USE AMOUNT          ⋯ [g]
   RECYCLED LITHIUM AMOUNT
              OUT OF ABOVE  ⋯ [g]
NICKEL USE AMOUNT           ⋯ [g]
   RECYCLED NICKEL AMOUNT
              OUT OF ABOVE  ⋯ [g]
COBALT USE AMOUNT           ⋯ [g]
   RECYCLED COBALT AMOUNT
              OUT OF ABOVE  ⋯ [g]
LEAD USE AMOUNT             ⋯ [g]
   RECYCLED LEAD AMOUNT
              OUT OF ABOVE  ⋯ [g]

┄┄┄┄┄┄┄┄┄┄┄┄┄┄┄┄┄┄┄┄┄┄┄┄┄┄
CARBON DIOXIDE EMISSION
              ⋯ [NOT DISCLOSED]
┄┄┄┄┄┄┄┄┄┄┄┄┄┄┄┄┄┄┄┄┄┄┄┄┄┄

DD INFORMATION             ⋯

Fig. 16

## Fig. 17

SERVER APPARATUS 1                  COMPANY TERMINAL 2

S21

REQUEST
INFORMATION
CONCERNING
PRODUCT TREE

S22

INTEGRATE
TRACEABILITY-RELATED
INFORMATION AND
GENERATE INFORMATION
CONCERNING
PRODUCT TREE

S23

EXECUTE CONCEALING
PROCESSING
ACCORDING TO
AUTHORITY

S24

OUTPUT
INFORMATION

Fig. 18

CONTROLLER 11

```
INFORMATION
COLLECTION UNIT
111
```

```
LINKING UNIT
112
```

```
AUTHORITY
SETTING UNIT
113
```

```
INFORMATION
PROVISION UNIT
114
```

MANAGEMENT UNIT
115

Fig. 19

CONTROLLER 21

PRODUCT
INFORMATION
GENERATION
UNIT 211

REQUEST UNIT
212

INFORMATION
SETTING UNIT
213

INFORMATION
ACQUISITION UNIT
214

MANAGEMENT
UNIT
215

# Fig. 20

COMPANY TERMINAL 2A
(DOWNSTREAM COMPANY)

SERVER APPARATUS 1

COMPANY TERMINAL 2B
(UPSTREAM COMPANY)

S31

| TRANSMIT PARTICIPATION REQUEST |

PARTICIPATION REQUEST →

S32

| TRANSMIT PARTICIPATION REQUEST TO DESIGNATED ADDRESS |

PARTICIPATION DEMAND →

S33

| GENERATE ANSWER TO PARTICIPATION DEMAND |

←— ANSWER ——

S34

| GENERATE ACCOUNT INFORMATION BASED ON ANSWER |

ACCOUNT INFORMATION →

← PROCESSING RESULT —

S35

| NOTIFY RESULT |

## INTERNATIONAL SEARCH REPORT

| International application No. |
| --- |
| **PCT/JP2023/025114** |

| | |
| --- | --- |
| **A.** | **CLASSIFICATION OF SUBJECT MATTER** |

*G06Q 50/10*(2012.01)i; *G06Q 10/0635*(2023.01)i; *G06Q 10/0833*(2023.01)i
FI: G06Q50/10; G06Q10/0635; G06Q10/0833

According to International Patent Classification (IPC) or to both national classification and IPC

| | |
| --- | --- |
| **B.** | **FIELDS SEARCHED** |

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2020-21134 A (HITACHI, LTD.) 06 February 2020 (2020-02-06) paragraphs [0010], [0014]-[0018], [0025], [0036]-[0052], [0065]-[0066], [0082]-[0088], [0090]-[0097], fig. 1-4, 8, 15 | 1-2, 5-6, 9-10, 13-14, 17-20 |
| A | | 3-4, 7-8, 11-12, 15-16 |
| A | US 2008/0010239 A1 (SAP AG) 10 January 2008 (2008-01-10) paragraphs [0026], [0032]-[0050] | 1-20 |
| A | JP 2008-139995 A (HITACHI, LTD.) 19 June 2008 (2008-06-19) paragraphs [0019], [0023]-[0024], [0029]-[0038], [0045], [0047]-[0052], [0057]-[0066] | 1-20 |
| A | JP 2004-145521 A (SEIKO EPSON CORPORATION) 20 May 2004 (2004-05-20) paragraphs [0007]-[0014], [0021] | 1-20 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

### INTERNATIONAL SEARCH REPORT
**Information on patent family members**

| International application No. |
|---|
| **PCT/JP2023/025114** |

| Patent document cited in search report | | | Publication date (day/month/year) | Patent family member(s) | Publication date (day/month/year) |
|---|---|---|---|---|---|
| JP | 2020-21134 | A | 06 February 2020 | US 2021/0294914 A1<br>paragraphs [0012], [0032]-[0036], [0043], [0054]-[0070], [0083]-[0084], [0100]-[0106], [0108]-[0115], fig. 1-4, 8, 15<br>WO 2020/026676 A1 | |
| US | 2008/0010239 | A1 | 10 January 2008 | (Family: none) | |
| JP | 2008-139995 | A | 19 June 2008 | US 2008/0148365 A1<br>paragraphs [0029], [0033]-[0034], [0039]-[0048], [0055], [0057]-[0062], [0067]-[0076]<br>EP 1927924 A1<br>CN 101192281 A<br>KR 10-2009-0004360 A | |
| JP | 2004-145521 | A | 20 May 2004 | US 2004/0122698 A1<br>paragraphs [0026]-[0034], [0049] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017500663 W